# EUROPEAN PATENT APPLICATION

(11) **EP 3 130 565 A1**
(43) Date of publication of application: **15.02.2017**
(21) Application number: 15777218.7
(22) Date of filing: 13.04.2015
(51) Int. Cl.: C02F 1/68, C01B 3/08

(54) **HYDROGEN GENERATION UNIT**

(30) Priority: 11.04.2014 JP 2014094177; 15.04.2014 JP 2014095483; 21.04.2014 JP 2014099987; 06.01.2015 JP 2015000740; 09.02.2015 JP 2015039291
(71) Applicant: Ecomo International Co., Ltd., Iizuka-shi, Fukuoka 820-0031 (JP)
(72) Inventor: FUKUOKA Kazuhisa, Iizuka-shi Fukuoka 820-0066 (JP)
(74) Representative: Takeuchi, Maya
(86) International application number: PCT/JP2015/061397
(87) International publication number: WO 2015/156415

(57) **Abstract**

Provided is a hydrogen generation unit which can produce a hydrogen containing liquid more conveniently compared to a conventional hydrogen adding instrument. The hydrogen generation unit is configured such that a hydrogen generating agent which generates hydrogen by being impregnated with water, the water, and a non-flowout state maintaining unit which maintains the water in a non-flowout state where the water does not react with the hydrogen generating agent are accommodated in an accommodating body having a discharge unit for discharging a hydrogen gas, and the non-flowout state maintaining unit is configured to change the water in the non-flowout state into a flowout state where the water is reactable with the hydrogen generating agent by applying a predetermined amount of energy to the accommodating body from outside the accommodating body, whereby the water brought into the flowout state is made to react with the hydrogen generating agent by being triggered by application of the energy and hydrogen generated in the accommodating body is discharged through the discharge unit, and the hydrogen-containing liquid is produced without permeation of the liquid into the hydrogen generation unit.

## Description

### Technical Field

The present invention relates to a hydrogen generation unit for producing a hydrogen-containing liquid by introducing hydrogen into a liquid.

### Background Art

Water which people daily take plays an extremely important role for building the foundation of their health. With the increase of needs for improvement of health among people, drinking water has been attracting further attentions.

Conventionally, various proposals have been made with respect to drinking water which satisfies such needs. For example, there has been known oxygen water in which a large amount of oxygen is dissolved in drinking water and hydrogen water in which hydrogen is dissolved.

Particularly, with respect to hydrogen water which contains molecular hydrogen, there have been made various reports that hydrogen water contributes to the improvement of health including lowering of a stress caused by oxidation in a living body and the suppression of the increase of LDL in blood.

Although such hydrogen water can be produced by dissolving hydrogen in water, the acquisition of hydrogen and dissolving of pure hydrogen in water are difficult in general.

Further, hydrogen dissolved in water is gradually leaked from water with time unless a container has extremely low hydrogen permeability. Accordingly, it is desirable that hydrogen water be drunk as earlier as possible after hydrogen water is prepared.

In view of the above, to enable the convenient preparation of hydrogen water even in a household or the like, there has been proposed a hydrogen adding instrument where hydrogen generating agent is sealed in a bottomed cylindrical container having a height of approximately several cm (see patent literature 1, for example).

Patent literature 1 also describes that, with the use of such a hydrogen adding instrument, hydrogen water in which hydrogen is made to be contained in water can be produced by putting a hydrogen generating agent in the container such as a PET bottle containing water and by hermetically sealing the container.

### [Citation List]

### [Patent Literature]

PTL 1: JP-A-2012-020962

### [Summary of Invention]

### [Technical Problem]

However, the above-mentioned conventional hydrogen adding instrument requires a series of operations where a hydrogen generating agent is taken out from a moisture proof package, the hydrogen generating agent is inserted into a sealed container provided separately, and a predetermined amount of water which reacts with the hydrogen generating agent is added to the hydrogen generating agent, and a lid of the sealed container is closed.

Such cumbersome operations are challenging particularly to a person such as an elderly person who is not good at an operation which requires fine movement of fingers. Accordingly, there has been a demand for a unit which can produce hydrogen water more conveniently.

The present invention has been made in view of the above-mentioned circumstances, and it is an object of the present invention to provide a hydrogen generation unit which can produce more conveniently a liquid which contains hydrogen (hereinafter referred to as hydrogen-containing liquid) compared to a conventional hydrogen adding instrument.

### [Solution to Problem]

To overcome the above-mentioned drawbacks of the prior art, a hydrogen generation unit according to the present invention is (1) a hydrogen generation unit for producing a hydrogen-containing liquid where the hydrogen generation unit is immersed in a liquid and hydrogen is made to be contained in the liquid, wherein the hydrogen generation unit is configured such that a hydrogen generating agent which generates hydrogen by being impregnated with water, the water, and a non-flowout state maintaining unit which maintains the water in a non-flowout state where the water does not react with the hydrogen generating agent are accommodated in an accommodating body having a discharge unit for discharging a hydrogen gas, and
the non-flowout state maintaining unit is configured to change the water in the non-flowout state into a flowout state where the water is reactable with the hydrogen generating agent by applying a predetermined amount of energy to the accommodating body from outside the accommodating body,
whereby the water brought into the flowout state is made to react with the hydrogen generating agent by being triggered by application of the energy and hydrogen generated in the accommodating body is discharged through the discharge unit, and the hydrogen-containing liquid is produced without permeation of the liquid into the hydrogen generation unit.

The hydrogen generation unit according to the present invention also has the following technical features.
(2) The discharge unit is formed of a hydrogen discharge port formed of a narrowed passage.
(3) The hydrogen generating agent, the water and the non-flowout state maintaining unit are accommodated in an accommodating chamber formed in the accommodating body having the hydrogen discharge port, and a reverse flow preventing portion is formed in the narrowed passage which communicates with the accommodating chamber.
(4) In a middle portion of the narrowed passage, a trap chamber which stores the water which possibly flows out from the inside of the accommodating body and the liquid which enters the trap chamber from the outside of the accommodating body is formed.
(5) The reverse flow preventing portion is formed by extending an end portion of the narrowed passage into the inside of the accommodating chamber and/or to the inside of the trap chamber at least at one portion of a communication base portion between the accommodating chamber and/or the trap chamber and the narrowed passage.
(6) The discharge unit is formed of a water-repellant hydrogen permeable membrane.
(7) The water-repellant hydrogen permeable membrane is at least one selected from a group consisting of a waterproof moisture permeable material, a semipermeable membrane, a reverse osmosis membrane, and a stretched PTFE.
(8) The water-repellant hydrogen permeable membrane is a membrane of an extremely large front surface area having a large number of minute apertures, and is configured to generate a large number of minute hydrogen bubbles from a front surface of the membrane due to permeation of hydrogen through the apertures.
(9) The non-flowout state maintaining unit is a flexible partitioned chamber which accommodates the water in a non-flowout state by hermetically accommodating the water, and the partitioned chamber includes an easy-to-break portion which brings the water into a flowout state by discharging water stored in the partitioned chamber by being applied with a predetermined amount of an external force as the energy.
(10) The accommodating chamber includes a water accommodating chamber and an agent accommodating chamber,
   the water accommodating chamber is formed in an upper portion of the accommodating body and the partitioned chamber and a penetrating member on which a penetrating projection having a sharpened distal end are accommodated in the water accommodating chamber, the penetrating member is accommodated in the water accommodating chamber such that the penetrating projection opposedly faces the easy-to-break portion of the partitioned chamber, and
   the agent accommodating chamber is formed in a lower portion of the accommodating body, the hydrogen generating agent is accommodated in the agent accommodating chamber, the water accommodating chamber and the agent accommodating chamber are made to communicate with each other through a movement passage, and the narrowed passage which makes the water accommodating chamber and the outside communicate with each other is disposed above the water accommodating chamber.
(11) The energy is heat, the water is frozen water, and the frozen water per se is configured to function as the non-flowout state maintaining unit.
(12) The energy is heat, the water is gelled water, and the gelled water per se is configured to function as the non-flowout state maintaining unit.

### Advantageous Effects of Invention

According to the hydrogen generation unit of the present invention, in a hydrogen generation unit for producing a hydrogen-containing liquid where the hydrogen generation unit is immersed in a liquid and hydrogen is made to be contained in the liquid, the hydrogen generation unit is configured such that a hydrogen generating agent which generates hydrogen by being impregnated with water, the water, and a non-flowout state maintaining unit which maintains the water in a non-flowout state where the water does not react with the hydrogen generating agent are accommodated in an accommodating body having a discharge unit for discharging a hydrogen gas, and
the non-flowout state maintaining unit is configured to change the water in the non-flowout state into a flowout state where the water is reactable with the hydrogen generating agent by applying a predetermined amount of energy to the accommodating body from outside the accommodating body,
whereby the water brought into the flowout state is made to react with the hydrogen generating agent by being triggered by application of the energy and hydrogen generated in the accommodating body is discharged through the discharge unit, and the hydrogen-containing liquid is produced without permeation of the liquid into the hydrogen generation unit. With such a configuration, compared with a conventional hydrogen adding instrument, it is possible to provide a hydrogen generation unit capable of producing a hydrogen-containing liquid more conveniently.

The discharge unit is formed of a hydrogen discharge port formed of a narrowed passage. Accordingly, a generated hydrogen gas can be discharged from the hydrogen discharge port with certainty and, at the same time, the hydrogen generation unit can be manufactured at a low cost and hence, the hydrogen generation unit is advantageous from a viewpoint of cost.

The hydrogen generating agent, the water and the non-flowout state maintaining unit are accommodated in an accommodating chamber formed in the accommodating body having the hydrogen discharge port, and a reverse flow preventing portion is formed in the narrowed passage which communicates with the accommodating chamber. Accordingly, even when water moves toward the outside of the accommodating body through the narrowed passage or a liquid outside the accommodating body advances toward the inside of the accommodating body by any chance, the reverse flow of water or the liquid can be prevented.

In a middle portion of the narrowed passage, a trap chamber which stores the water which possibly flows out from the inside of the accommodating body and the liquid which enters the trap chamber from the outside of the accommodating body. Accordingly, even when water moves toward the outside of the accommodating body through the narrowed passage or a liquid outside the accommodating body advances toward the inside of the accommodating body by any chance, water or the liquid is stored in the trap chamber and hence, it is possible to prevent water containing undesired ions generated due to the generation of hydrogen from flowing out into the liquid through the narrowed passage or the liquid from flowing into the inside of the accommodating body thus affecting the generation of hydrogen.

The reverse flow preventing portion is formed by extending an end portion of the narrowed passage into the inside of the accommodating chamber and/or to the inside of the trap chamber at least at one portion of a communication base portion between the accommodating chamber and/or the trap chamber and the narrowed passage. Accordingly, even when water moves toward the outside of the accommodating body through the narrowed passage or a liquid outside the accommodating body advances toward the inside of the accommodating body by any chance, the reverse flow of water or the liquid stored in the accommodating chamber or the trap chamber can be prevented as much as possible and hence, it is possible to prevent water containing undesired ions generated due to the generation of hydrogen from flowing out into the liquid through the narrowed passage or the liquid from flowing into the inside of the accommodating body thus affecting the generation of hydrogen.

The discharge unit is formed of a water-repellant hydrogen permeable membrane. Accordingly, a generated hydrogen gas can be broadly dissolved in the liquid.

The water-repellant hydrogen permeable membrane is at least one selected from a group consisting of a waterproof moisture permeable material, a semipermeable membrane, a reverse osmosis membrane, and a stretched PTFE. Accordingly, generated hydrogen can be discharged into the liquid efficiently while the entrance of the liquid into the inside of the hydrogen generation unit where hydrogen is being generated in the liquid can be prevented with certainty.

The water-repellant hydrogen permeable membrane is a membrane of an extremely large front surface area having a large number of minute apertures, and is configured to generate a large number of minute hydrogen bubbles from a front surface of the membrane due to permeation of hydrogen through the apertures. Accordingly, a hydrogen gas which permeates a membrane and is blown out from the membrane can be formed into an extremely minute particles and hence, hydrogen dissolution at high concentration can be acquired even when the hydrogen gas is not agitated.

The non-flowout state maintaining unit is a flexible partitioned chamber which accommodates the water in a non-flowout state by hermetically accommodating the water, and the partitioned chamber includes an easy-to-break portion which brings the water into a flowout state by discharging water stored in the partitioned chamber by being applied with a predetermined amount of an external force as the energy. Since the partitioned chamber includes the easy-to-break portion which brings the water into a flowout state by discharging water stored in the partitioned chamber, it is possible to bring water into a flowout state by merely pressing the partitioned chamber from the outside of the accommodating body with a fingertip. Accordingly, a hydrogen generation reaction can be started extremely conveniently.

The accommodating chamber includes a water accommodating chamber and an agent accommodating chamber,
the water accommodating chamber is formed in an upper portion of the accommodating body and the partitioned chamber and a penetrating member on which a penetrating projection having a sharpened distal end are accommodated in the water accommodating chamber, the penetrating member is accommodated in the water accommodating chamber such that the penetrating projection opposedly faces the easy-to-break portion of the partitioned chamber, and
the agent accommodating chamber is formed in a lower portion of the accommodating body, the hydrogen generating agent is accommodated in the agent accommodating chamber, the water accommodating chamber and the agent accommodating chamber are made to communicate with each other through a movement passage, and the narrowed passage which makes the water accommodating chamber and the outside communicate with each other is disposed above the water accommodating chamber.

Accordingly, it is possible to bring water into a flowout state by merely pressing the partitioned chamber by way of the water accommodating chamber from the outside of the accommodating body with a fingertip. Further, it is possible to surely bring water in the water accommodating chamber in a flowout state into contact with a hydrogen generating agent accommodated in the agent accommodating chamber disposed below due to gravity so that hydrogen can be generated. Still further, generated hydrogen can be discharged from an upper end portion of the accommodating body away from the hydrogen generating agent from which hydrogen is generated and hence, it is possible to prevent water containing undesired ions generated due to the generation of hydrogen from flowing out into a liquid which passes the narrowed passage.

The energy is heat, the water is frozen water, and the frozen water per se is configured to function as a non-flowout state maintaining unit. With such a configuration, for example, only by taking out the hydrogen generation unit from a freezer and leaving the hydrogen generation unit in atmosphere or only by warming hands, water can be brought into a flowout state and hence, a hydrogen generation reaction can be started extremely conveniently.

The energy is heat, the water is gelled water, and the gelled water per se is configured to function as the non-flowout state maintaining unit. By applying heat to an extent that water in a gel form can be fluidized, water is brought into a flowout state and hence, a hydrogen generation reaction can be easily generated.

### Brief Description of Drawings

[Fig. 1] Fig. 1(a) are a front view and a view showing an upper end of a hydrogen generation unit, Fig. 1(b) is a view showing a penetrating member, and Fig. 1(c) is a side view of the hydrogen generation unit.
[Fig. 2] Fig. 2 is a developed view of the hydrogen generation unit.
[Fig. 3] Fig. 3(a) is an explanatory view of the hydrogen generation unit where water is in a non-flowout state, Fig. 3(b) is an explanatory view of the hydrogen generation unit where the water is in the midst of a flowout state, and Fig. 3(c) is an explanatory view of the hydrogen generation unit where the water is in the end of the flowout state.
[Fig. 4] Fig. 4(a) is an explanatory view of an upper portion of a preparation container with a lid opened and in which the hydrogen generation unit is immersed, and Fig. 4(b) is an explanatory view of the upper portion of the preparation container with the lid closed after the hydrogen generation unit is immersed.
[Fig. 5] Fig. 5(a) is a front view of a modification of the hydrogen generation unit (accommodating body), Fig. 5(b) is a side view of the hydrogen generation unit of the modification and Fig. 5(c) is an explanatory view showing a state where the hydrogen generation unit is reversed.
[Fig. 6] Fig. 6(a) is a front view and a side view of another modification of the hydrogen generation unit (accommodating body), and Fig. 6(b) are a front view and a side view of still another modification of the hydrogen generation unit (accommodating body).
[Fig. 7] Fig. 7(a) to Fig. 7(e) are front views of other modifications of the hydrogen generation unit (accommodating body).
[Fig. 8] Fig. 8(a) is a front view of a hydrogen generation unit according to still another embodiment, Fig. 8(b) is a side view of the hydrogen generation unit, and Fig. 8(c) is a side view showing a modification of the hydrogen generation unit according to still another embodiment.
[Fig. 9] Fig. 9(a) is a front view of a modification of the hydrogen generation unit according to another embodiment, and Fig. 9(b), Fig. 9(c) are side views of the modification of the hydrogen generation unit.
[Fig. 10] Fig. 10(a) is a front view of the hydrogen generation unit according to further another embodiment, and Fig. 10(b) is an explanatory view showing a state where the hydrogen generation unit is used.
[Fig. 11] Fig. 11(a) are a perspective view and a developed view of a hydrogen generation unit according to still further another embodiment, and Fig. 11(b) is an explanatory view showing a state where the hydrogen generation unit according to still further another embodiment is used.
[Fig. 12] Fig. 12 is an explanatory view showing a state where hydrogen-containing liquid is produced using the hydrogen generation unit.
[Fig. 13] Fig. 13 is an explanatory view showing the configuration of the hydrogen generation unit.
[Fig. 14] Fig. 14 is an explanatory view showing a state where the hydrogen generation unit is used.
[Fig. 15] Fig. 15 is an explanatory view showing the configuration of a hydrogen generation unit according to further another embodiment.
[Fig. 16] Fig. 16 is an explanatory view of a hydrogen generation unit according to still further another embodiment.
[Fig. 17] Fig. 17(a) and Fig. 17(b) are explanatory views of a hydrogen generation unit according to still further another embodiment.

### Description of Embodiments

The present invention relates to a hydrogen generation unit for producing a hydrogen-containing liquid where the hydrogen generation unit is immersed in a liquid and hydrogen is made to be contained in the liquid.

A hydrogen generation unit according to this embodiment is characteristically configured such that a hydrogen generating agent which generates hydrogen by being impregnated with water, the water, and a non-flowout state maintaining unit which maintains the water in a non-flowout state where the water does not react with the hydrogen generating agent are accommodated in an accommodating body having a discharge unit for discharging a hydrogen gas, and the non-flowout state maintaining unit is configured to change the water in the non-flowout state into a flowout state where the water is reactable with the hydrogen generating agent by applying a predetermined amount of energy to the accommodating body from outside the accommodating body, whereby the water brought into the flowout state is made to react with the hydrogen generating agent by being triggered by application of the energy and hydrogen generated in the accommodating body is discharged through the discharge unit, and the hydrogen-containing liquid is produced without using infiltration of the liquid into the hydrogen generation unit.

Here, a liquid used for dissolving hydrogen is not particularly limited. However, a liquid may be a beverage such as water, juice or tea or a liquid object such as a liquid medicine used in an injection or a drip infusion used for a living body not to stick to a human.

A hydrogen generating agent is not particularly limited provided that the hydrogen generating agent generates hydrogen by being brought into contact with moisture and may be a mixture.

As a mixture which generates hydrogen by being brought into contact with moisture, for example, a mixture of metal or metallic compound having higher ionization tendency than hydrogen and a reaction accelerator such as an acid or alkali can be named.

As metal which can be favorably used, for example, iron, aluminum, nickel, cobalt, zinc and the like can be named. As a reaction accelerator which can be favorably used, for example, besides various kinds of acid, calcium hydroxide, calcium oxide, an anion-exchange resin, calcinated calcium, magnesium oxide, magnesium hydrate or the like can be used.

When necessary, a material having suitable functionality may be added to the hydrogen generating agent within a range where the material does not inhibit necessary hydrogen generation reaction in practical use. For example, by adding a material which generates an endothermic reaction by being brought into contact with water (for example, urea or a material corresponding to a food additive which causes substantially equal effect to urea), heat generated by a hydrogen generation reaction can be suppressed.

Further, a hydrogen generating agent is not always limited to be arranged in such a manner that the hydrogen generating agent is accommodated in a bag body made of nonwoven fabric or the like and is arranged at a predetermined place. However, the hydrogen generating agent may be directly arranged at a predetermined position according to an embodiment.

Water is not particularly limited provided that the water can generate hydrogen from the hydrogen generating agent. For example, pure water, tap water, well water or the like can be used. Water may be any water unless the water prevents the generation of hydrogen to such a degree that hydrogen-containing liquid cannot be produced, and water may be water in which some material is dissolved. For example, an acid as a reaction accelerator may be dissolved in water and, then, the water is made to react with metal or metal compound thus forming a hydrogen generating agent while supplying the water whereby hydrogen is generated.

A non-flowout state maintaining unit is a unit for maintaining water into a non-flowout state where the water does not react with a hydrogen generating agent (metal or metal compound when the hydrogen generating agent is formed at the same time as adding the water). Such a unit may be configured not only by a unit formed of physical structure but also by a unit derived from physical properties.

As one example of the non-flowout state maintaining unit realized by the physical structure, for example, a non-flowout state maintaining unit formed of a flexible partitioned chamber which accommodates water in a non-flowout state by hermetically accommodating the water can be named.

In the partitioned chamber, an easy-to-break portion which brings the water into a flowout state by discharging water stored in the partitioned chamber by being applied with a predetermined amount of an external force is formed. Accordingly, a hydrogen generation reaction can be started when a user desires.

As one example of the non-flowout state maintaining unit realized by physical properties, for example, freezing of water can be named. That is, frozen water (ice) does not start a hydrogen generation reaction even when the frozen water is in a contact state with the hydrogen generating agent, the metal compound or the like and hence, the frozen water per se can be configured to function as the non-flowout state maintaining unit.

Such a unit is not limited to freezing of water. Gelled water may be formed by adding a high molecular compound to water, for example, agar, whose state is changed by heat between a state where the high molecular compound exhibits extremely low liquidity or a state where the high molecular compound is solidified and a state where the high molecular compound exhibits high liquidity, and the gelled water per se may be configured to function as the non-flowout state maintaining unit. That is, the non-flowout state maintaining unit may be realized by making water contain a gelling agent which does not generate a hydrogen generation reaction against the hydrogen generating agent before energy is applied and, by applying energy, becomes able to supply moisture which can generate a hydrogen generation reaction to an extent that the hydrogen-containing liquid can be produced to the hydrogen generating agent.

Energy applied to the non-flowout state maintaining unit is not particularly limited provided that the energy can change the state of the water to a flowout state from the non-flowout state, and for example, force, heat, electromagnetic waves including light, a sound wave and the like can be named.

Particularly, when the non-flowout state maintaining unit is realized by the previously-described partitioned chamber, the hydrogen generation reaction can be triggered by application of external force as the energy. It is needless to say that the previously-described easy-to-break portion is formed such that the easy-to-break portion can discharge water by this external force.

When the non-flowout state maintaining unit is realized by the previously-described frozen water, the hydrogen generation reaction can be triggered by application of heat as the energy. The state of the frozen water can be changed into a flowout state by electromagnetic waves or the like. However, in many cases, the water is brought into a liquid state by thermal motion and hence, in this specification, it should be interpreted that application of the electromagnetic waves or the like has the same meaning as application of the heat.

The hydrogen generating agent, the water, and the non-flowout state maintaining unit are accommodated in an accommodating body thus forming the hydrogen generation unit. The accommodating body may include a raw material or the structure which can transmit the energy applied to the previously-described non-flowout state maintaining unit.

That is, when the non-flowout state maintaining unit is realized by the previously-described partitioned chamber, the accommodating body may include a portion which can transmit the external force to the partitioned chamber and, as the portion, a raw material or the structure which can transmit the external force to the partitioned chamber via a wall portion of the accommodating body by being yielded when the portion is pressed with a fingertip, for example, can be named.

When the non-flowout state maintaining unit is realized by the previously-described frozen water, the non-flowout state maintaining unit is provided with a portion which transmits heat or allows electromagnetic waves or the like to permeate therethrough thus bringing the frozen water into a flowout state.

It is not always necessary that the hydrogen generating agent, the water, and the non-flowout state maintaining unit be integrally formed with the accommodating body. As for one specific example, the hydrogen generation unit may be configured such that a bag accommodating the hydrogen generating agent, the water, and the non-flowout state maintaining unit (hereinafter, referred to as hydrogen generation structural body) and an accommodating body which accommodates the hydrogen generation structural body are formed separately.

That is, when the non-flowout state maintaining unit is realized by the partitioned chamber, a case where, by pressing the partitioned chamber of the hydrogen generation structural body with a fingertip or the like, the water is brought into contact with the hydrogen generating agent, the hydrogen generation structural body where the hydrogen generation reaction is started is accommodated in the accommodating body thus forming the hydrogen generation unit, and the hydrogen generation unit is immersed in the liquid can be named.

In this case, when the hydrogen generation structural body is configured such that the external force, the heat or the like can be transmitted to the non-flowout state maintaining unit, it is not always necessary to provide such a portion which can transmit the external force, the heat or the like to the accommodating body per se. However, it is necessary to form the hydrogen generation structural body such that the hydrogen generation structural body can discharge hydrogen in the accommodating body.

The accommodating body includes a hydrogen discharge port formed of a narrowed passage or a water-repellant hydrogen permeable membrane as a discharge unit for discharging the hydrogen generated in the inside of the accommodating body to the outside of the hydrogen generation unit.

The accommodating body per se which includes this hydrogen discharge port may be formed of a raw material which can prevent the liquid outside the hydrogen generation unit from infiltrating into the accommodating body and can discharge the hydrogen generated in the inside of the accommodating body to the outside of the accommodating body only from the hydrogen discharge port.

It is further desirable that the raw material be a material which does not allow a metal ion, an inorganic compound and an organic substance such as a component which forms the hydrogen generating agent to permeate therethrough.

As such a raw material, for example, a synthetic resin material such as polypropylene, polyethylene, and polyester can be named.

The narrowed passage formed in the accommodating body is provided for discharging the hydrogen to the outside. To this purpose, the narrowed passage may be diverged in the midst thereof or may be discontinuously formed (a plurality of narrowed passages are provided). Further, the narrowed passage may be suitably formed such that the narrowed passage has a straight shape, a curved shape and the like.

By the way, it is possible to add a mechanical valve mechanism such as a check valve to the hydrogen discharge port which constitutes the discharge unit. That is, by instantaneously opening the hydrogen discharge port against a biased force of the valve mechanism which prevents the infiltration of the liquid by an inner pressure of the generated hydrogen, bubbles of the hydrogen can be discharged into the liquid from the inside of the accommodating body.

When the water-repellant hydrogen permeable membrane is used as the discharge unit, the water-repellant hydrogen permeable membrane may be formed of a raw material which can prevent the liquid outside the hydrogen generation unit from infiltrating into the accommodating body and can discharge the hydrogen generated in the inside of the accommodating body to the outside of the accommodating body.

It is further desirable that the raw material be a material which does not allow a metal ion, an inorganic compound and an organic substance such as a component which forms the hydrogen generating agent to permeate therethrough.

As such a raw material, for example, a waterproof moisture permeable material (a raw material which allows permeation of water in a gas form therethrough while preventing permeation of water in a liquid form), a semipermeable membrane, a reverse osmosis membrane, a stretched PTFE or the like can be named.

By forming the water-repellant hydrogen permeable membrane using a waterproof moisture permeable material, a semipermeable membrane, or a reverse osmosis membrane, the discharge unit can be formed at a relatively low cost.

Further, the stretched PTFE is one of the raw materials which play leading roles of the so-called Gore-Tex (registered trademark). It is needless to say that the stretched PTFE allows the permeation of water vapor and hydrogen while preventing the permeation of water in a liquid form. Besides, the stretched PTFE has extremely excellent thermal resistance. Accordingly, the stretched PTFE can reliably prevent the phenomenon where the discharge unit is degenerated attributed to heat of reaction generated by the hydrogen generation reaction.

Further, on a surface of the water-repellant hydrogen permeable membrane on a side in contact with the liquid, a plurality of fine irregularities or flocked bodies may be formed so as to increase a contact area with the liquid. By forming the plurality of fine irregularities on the surface of the water-repellant hydrogen permeable membrane or by forming the surface of the water-repellant hydrogen permeable membrane into a fine brush-like shape, a contact area of the liquid and the bubbles can be increased. Accordingly, the hydrogen-containing liquid can be more efficiently produced.

By the way, the discharge unit can be realized by a mechanical valve mechanism such as a check valve. That is, by instantaneously opening the hydrogen discharge port against a biased force of the valve mechanism which prevents the infiltration of the liquid by an inner pressure of the generated hydrogen, bubbles of the hydrogen can be discharged into the liquid from the inside of the accommodating body.

In this manner, according to the hydrogen generation unit of this embodiment, a hydrogen-containing liquid can be produced more conveniently compared to a conventional hydrogen adding instrument. Further, since the hydrogen-containing liquid is produced without using infiltration of the liquid into the hydrogen generation unit, a possibility that the component of the hydrogen generating agent leaks into the liquid along with the circulation of the liquid inside and outside of the hydrogen generation unit can be suppressed as much as possible.

Hereinafter, the hydrogen generation unit which includes the hydrogen discharge port formed of the narrowed passage as the discharge unit for discharging the hydrogen to the outside the hydrogen generation unit is described as first to fifth embodiments, and the hydrogen generation unit which includes the water-repellant hydrogen permeable membrane is described as sixth to tenth embodiments.

First, the hydrogen generation unit according to this embodiment having a hydrogen discharge port formed of a narrowed passage is described with reference to drawings.

### [First embodiment]

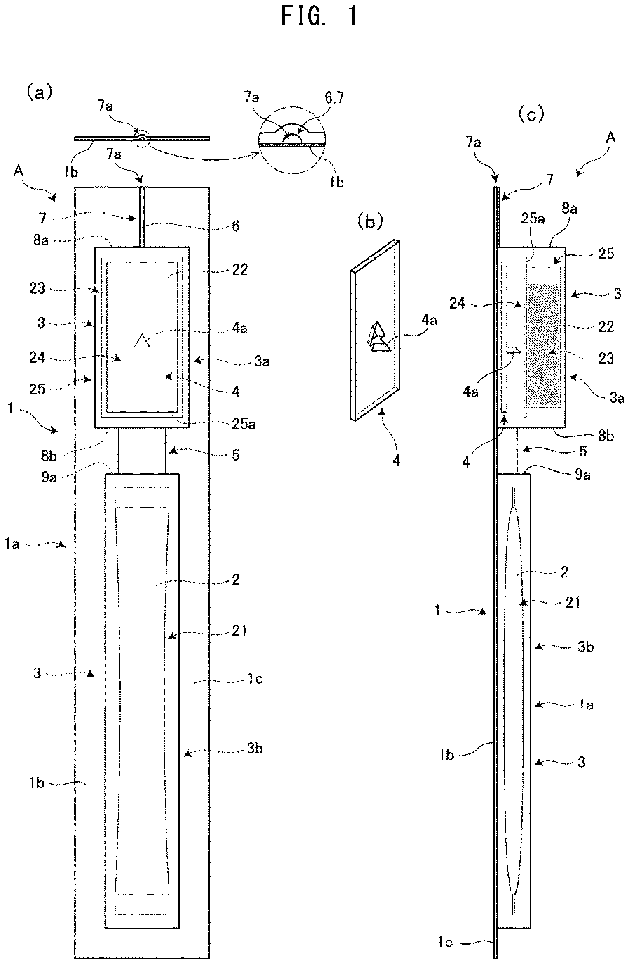

As shown in Fig. 1 to Fig. 4, a hydrogen generation unit A according to a first embodiment is a hydrogen generation unit A for producing a hydrogen-containing liquid where the hydrogen generation unit A is immersed in a liquid 11 and hydrogen is made to be contained in the liquid 11, wherein the hydrogen generation unit A is configured such that a hydrogen generating agent 2 which generates hydrogen by being impregnated with water, the water 22, and a non-flowout state maintaining unit which maintains the water 22 in a non-flowout state where the water 22 does not react with the hydrogen generating agent 2 are accommodated in an accommodating body 1 having a hydrogen discharge port 7 formed of a tubular narrowed passage 6, and the non-flowout state maintaining unit is configured to change the water 22 in the non-flowout state into a flowout state where the water 22 is reactable with the hydrogen generating agent 2 by applying a predetermined amount of energy to the accommodating body 1 from outside the accommodating body 1, whereby the water 22 brought into the flowout state is made to react with the hydrogen generating agent 2 by being triggered by application of the energy and hydrogen generated in the accommodating body 1 is discharged through the hydrogen discharge port 7, and the hydrogen-containing liquid is produced without permeation of the liquid 11 into the hydrogen generation unit A.

The non-flowout state maintaining unit is a flexible partitioned chamber 23 which accommodates the water 22 in a non-flowout state by hermetically accommodating the water 22, and the partitioned chamber 23 includes an easy-to-break portion 24 which brings the water 22 into a flowout state by discharging water 22 stored in the partitioned chamber 23 by being applied with a predetermined amount of an external force as the energy.

Further, the hydrogen generating agent 2, the water 22 and the non-flowout state maintaining unit are accommodated in the accommodating chamber 3 formed in the accommodating body 1. The accommodating chamber 3 includes a water accommodating chamber 3a and an agent accommodating chamber 3b. The water accommodating chamber 3a is formed in an upper portion of the accommodating body 1 and the partitioned chamber 23 and a penetrating member 4 on which a penetrating projection 4a having a sharpened distal end are accommodated in the water accommodating chamber 3a, the penetrating member 4 is accommodated in the water accommodating chamber 3a such that the penetrating projection 4a opposedly faces the easy-to-break portion 24 of the partitioned chamber 23. The agent accommodating chamber 3b is formed in a lower portion of the accommodating body 1, the hydrogen generating agent 2 is accommodated in the agent accommodating chamber 3b, the water accommodating chamber 3a and the agent accommodating chamber 3b are made to communicate with each other through a movement passage 5, and the narrowed passage 6 which makes the water accommodating chamber 3a and the outside communicate with each other is disposed above the water accommodating chamber 3 a.

To be more specific, the accommodating body 1 is formed with a width which allows the accommodating body 1 to be put into a preparation container 10 described later from an opening portion of the preparation container 10. The accommodating body 1 is formed of a casing portion 1a and a sealed film sheet 1b. The casing portion 1a is formed such that a strip-shaped plastic sheet is indented from a front surface side to a rear side thus forming the narrowed passage 6, the water accommodating chamber 3a, the movement passage 5 and the agent accommodating chamber 3b, and the narrowed passage 6. The water accommodating chamber 3a, the movement passage 5 and the agent accommodating chamber 3b are disposed from an upper portion to a lower portion of the casing portion 1a in a communicable manner. A joint portion 1c is formed of a front surface of a flat outer edge portion of the casing portion 1a which is not indented. The sealed film sheet 1b is a strip-shaped film sheet welded to the joint portion 1c thus sealing the respective indented portions.

The partitioned chamber 23 which accommodates water (hereinafter referred to as "reaction water") 22 and the penetrating member 4 are accommodated in the water accommodating chamber 3a, and a hydrogen generating body 21 which embraces the hydrogen generating agent 2 is accommodated in the agent accommodating chamber 3b.

The sealed film sheet 1b is formed into a rectangular shape equal to an outer shape of the casing portion 1a as viewed in a front view, and forms the hydrogen generation unit A as an integral body by being welded to the accommodating body 1. The sealed film sheet 1b may be joined to the joint portion 1c using an adhesive agent instead of being joined by welding.

Polypropylene which is a plastic sheet material having favorable heat resistance, impact resistance, airtightness is used as a material for forming the casing portion 1a. However, provided that a material has heat resistance, does not allow drinking water 11 outside the accommodating body 1 to permeate into the accommodating body 1, and does not allow the reaction water 22 inside the accommodating body 1 to permeate to the outside of the accommodating body 1, a material for forming the casing portion 1a is not particularly limited, and a sheet material which uses a synthetic resin material such as polyethylene as a base material or the like may be used.

Polyester which is a transparent plastic film material having favorable heat resistance, impact resistance and airtightness is used as a material for forming the sealed film sheet 1b. However, provided that a material has heat resistance, does not allow the drinking water 11 outside the accommodating body 1 to permeate into the accommodating body 1, and does not allow the reaction water 22 inside the accommodating body 1 to permeate to the outside of the accommodating body 1, the material for forming the sealed film sheet 1b or transparency of the material is not particularly limited, and a film material which uses a synthetic resin material such as orientation polypropylene (OPP) or polyethylene as a base material or the like may be used. Although a material for forming the sealed film sheet 1b is not particularly limited, a material having high transparency allows a user to easily observe a flowout state of the reaction water 22 and a contact state of the reaction water 22 to the hydrogen generating body 21 and hence, a material having high transparency has advantageous effects from such a viewpoint.

The narrowed passage 6 which forms the hydrogen discharge port 7 is formed such that an opening 7a is formed at a center portion of an upper end of the casing portion 1a, the narrowed passage 6 linearly extends from the opening 7a to the water accommodating chamber 3a disposed below the opening 7a, and the narrowed passage 6 is communicably connected to the water accommodating chamber 3a. The hydrogen discharge port 7 is formed to have an approximately semicircular shape in cross section, and has the opening 7a having a small diameter, for example, a diameter of approximately 1mm, which prevent the liquid (hereinafter referred to as "drinking water) 11 from easily entering the inside of the accommodating body 1 from the outside the accommodating body 1. The narrowed passage 6 per se is also formed to have substantially the same cross-sectional shape and the same diameter as the hydrogen discharge port 7.

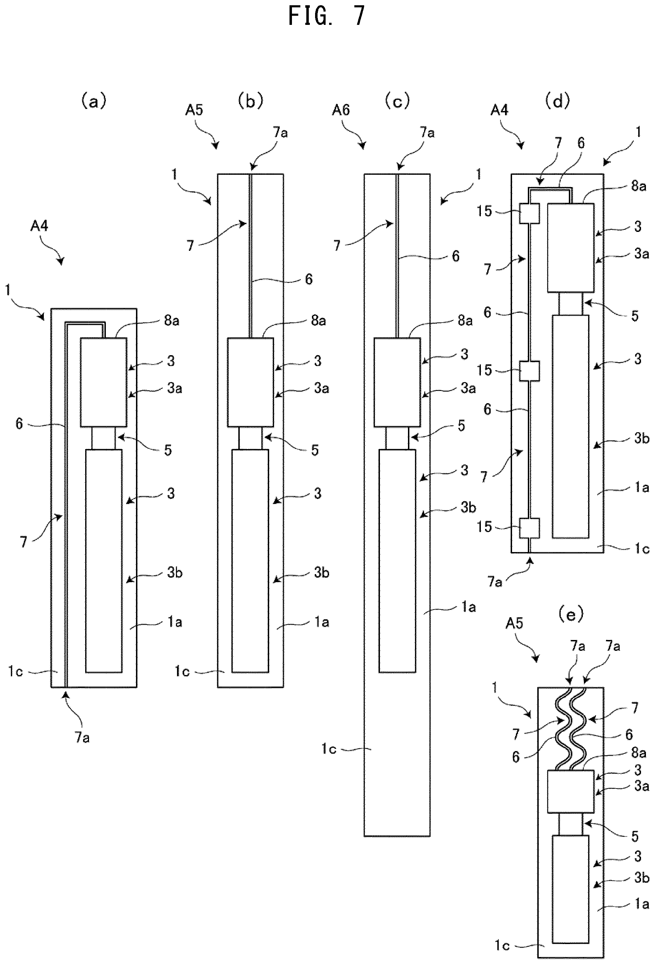

A cross-sectional area of an opening of the hydrogen discharge port 7 may be set larger than a cross-sectional area of a middle portion of the narrowed passage 6, and a passage from the opening 7a to the water accommodating chamber 3a may be formed in a curved shape (see Fig. 7(e)). It is desirable that a distance from the opening 7a to the water accommodating chamber 3a be set to a large value from a viewpoint of preventing the entering of the drinking water 11 from the outside the accommodating body 1 and the flowout of the reaction water 22 in the accommodating body 1. In this embodiment, the distance from the opening 7a to the water accommodating chamber 3a is set to approximately 10mm. The narrowed passage 6 may not be formed of one narrowed passage (see Fig. 7(e)).

It is sufficient that a depth of the water accommodating chamber 3a be set to a depth which allows the water accommodating chamber 3a to accommodate the partitioned chamber 23 and the penetrating member 4 described later with allowance.

The water accommodating chamber 3a is formed into a bottomed rectangular box shape having a longitudinal direction thereof extending in a vertical direction, and is communicably connected to the narrowed passage 6 at a center of an open end portion of an upper side wall 8a. The water accommodating chamber 3a is also communicably connected to the movement passage 5 formed with a width approximately 1/2 of a lower side wall 8b at a center of an open end portion of the lower side wall 8b. A shape of the water accommodating chamber 3a is not necessarily limited to a rectangular box shape.

The movement passage 5 linearly extends to the agent accommodating chamber 3b disposed below the movement passage 5 with a short length, and is communicably connected to the agent accommodating chamber 3b. In this embodiment, a length of the movement passage 5 is set to substantially equal to a width of the movement passage 5. However, it is sufficient that the movement passage 5 has a shape which allows the reaction water 22 to rapidly move from the water accommodating chamber 3a to the agent accommodating chamber 3b with certainty.

The agent accommodating chamber 3b is formed into a bottomed rectangular box shape having a longitudinal direction thereof extending in a vertical direction, and is communicably connected to the movement passage 5 at a center of an open end portion of an upper side wall 9a. The agent accommodating chamber 3b is formed with a space as close as possible to an outer shape of the hydrogen generating body 21 described later so that the hydrogen generating body 21 accommodated in the agent accommodating chamber 3b is minimally moved. Accordingly, the agent accommodating chamber 3b is formed with a width slightly larger than a width of the movement passage 5 thus preventing the movement of the hydrogen generating body 21 in the agent accommodating chamber 3b toward a movement passage 5 side.

The water accommodating chamber 3a and the like formed as described above form the casing portion 1a as a whole with a flat outer edge portion which surrounds the water accommodating chamber 3a and the like used as the joint portion 1c, and the above-mentioned respective portions are sealed by welding the strip-shaped sealed film sheet 1b to the joint portion 1c thus forming the accommodating body 1.

The following members are accommodated in the water accommodating chamber 3a and the agent accommodating chamber 3b which are hermetically sealed thus forming the hydrogen generation unit A.

First, the partitioned chamber 23 embracing the reaction water 22 which is accommodated in the water accommodating chamber 3a is brought into a watertight state as follows. That is, a box body 25 has a bottomed rectangular box shape and has a joint flange portion 25a on a whole periphery of an open end portion thereof, the easy-to-break portion 24 having a rectangular film shape is formed of a thin membrane which covers an opening of the box body 25, and an outer edge of the easy-to-break portion 24 is welded to the joint flange portion 25a thus bringing the partitioned chamber 23 into a watertight state. In this embodiment, filling of the reaction water 22 into the partitioned chamber 23 is performed in a clean room so as to embrace the reaction water 22 in the partitioned chamber 23 in a sterile condition as much as possible. The easy-to-break portion 24 may be joined to the joint flange portion 25a using an adhesive agent instead of being joined by welding.

Polypropylene which is a plastic sheet material having favorable airtightness is used as a material for forming the box body 25. However, provided that a material does not allow the reaction water 22 inside the accommodating body 1 to permeate to the outside of the accommodating body 1, the material for forming the box body 25 is not particularly limited, and a sheet material which uses a synthetic resin material such as polyethylene as a base material or the like may be used.

Polyester which is a transparent plastic film material having favorable airtightness is used as a material for forming the easy-to-break portion 24. However, provided that a material does not allow the reaction water 22 inside the accommodating body 1 to permeate to the outside of the accommodating body 1 and is easily broken, a material for forming the easy-to-break portion 24 or transparency of the material is not particularly limited, and a film material which uses a synthetic resin material such as orientation polypropylene (OPP) or polyethylene as a base material or the like may be used.

The partitioned chamber 23 is accommodated in the water accommodating chamber 3a such that a bottom portion of the water accommodating chamber 3a opposedly faces a bottom portion of the partitioned chamber 23, that is, a side of the partitioned chamber 23 which opposedly faces the easy-to-break portion 24. It is desirable that the partitioned chamber 23 have an outer shape which prevents the unnecessary movement of the partitioned chamber 23 in the water accommodating chamber 3a.

The reaction water 22 is water which causes a hydrogen generation reaction by being brought into contact with the hydrogen generating agent 2. In this embodiment, pure water is used as the reaction water 22. The reaction water 22 accommodated in the partitioned chamber 23 is maintained in a non-flowout state.

The penetrating member 4 is also accommodated in the water accommodating chamber 3a together with the partitioned chamber 23. As shown in Fig. 1(b), the penetrating member 4 is formed using a synthetic resin material having a rectangular sheet shape which has an area approximately equal to an area of an opening of the partitioned chamber 23 and a relatively large thickness (approximately 0.5mm). The penetrating projection 4a is formed at substantially the center portion of the penetrating member 4. The penetrating projection 4a is formed into a triangular shape having a sharpened distal end where two sides are cut and a remaining one side is bent, and the penetrating member 4 is accommodated in the water accommodating chamber 3a in a state where the penetrating projection 4a opposedly faces the easy-to-break portion 24.

Polypropylene which is a plastic sheet material having favorable impact resistance is used as a material for forming the penetrating member 4. However, a material for forming the penetrating member 4 is not particularly limited, and a sheet material which uses a synthetic resin material such as polyethylene as a base material or the like may be used.

The partitioned chamber 23 and the penetrating member 4 form the non-flowout state maintaining unit, and are accommodated in the water accommodating chamber 3a. In the water accommodating chamber 3a, by pushing the sealed film sheet 1b which seals the casing portion 1a by a fingertip from the outside the accommodating body 1, the penetrating projection 4a breaks the easy-to-break portion 24 thus forming a break hole 28 so that the reaction water 22 embraced in the partitioned chamber 23 can be brought into a flowout state where the reaction water 22 is flown out through the break hole 28. That is, an external force by a fingertip is used as an energy, and the reaction water 22 can be changed to a flowout state from a non-flowout state by being triggered by application of the energy.

The hydrogen generating agent 2 is accommodated in the agent accommodating chamber 3b as the hydrogen generating body 21, and the hydrogen generating body 21 is formed into a bag shape having a large length using a nonwoven fabric having permeability, and accommodates the hydrogen generating agent 2 therein. The hydrogen generating body 21 is a part which causes a hydrogen generation reaction by being brought into contact with the reaction water 22 in a flowout state. In this embodiment, the hydrogen generating agent 2 is a mixed powder which contains aluminum and calcium hydroxide as main components.

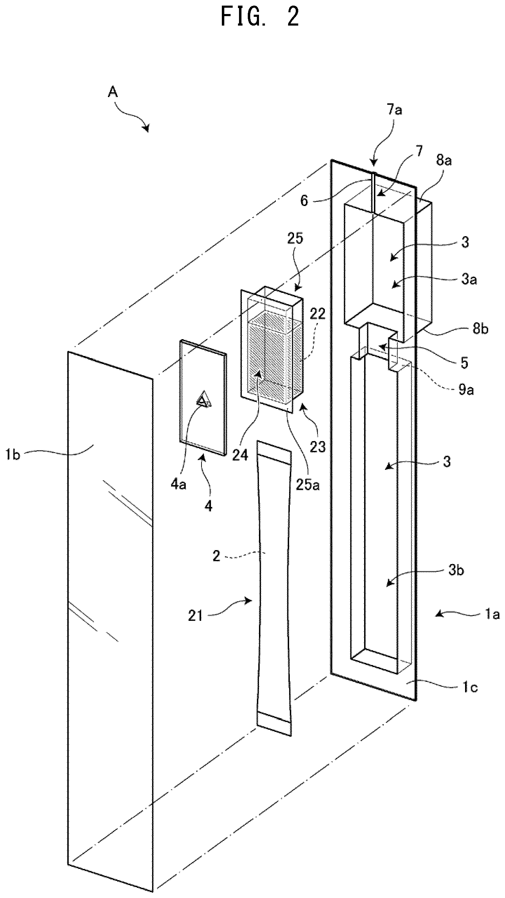

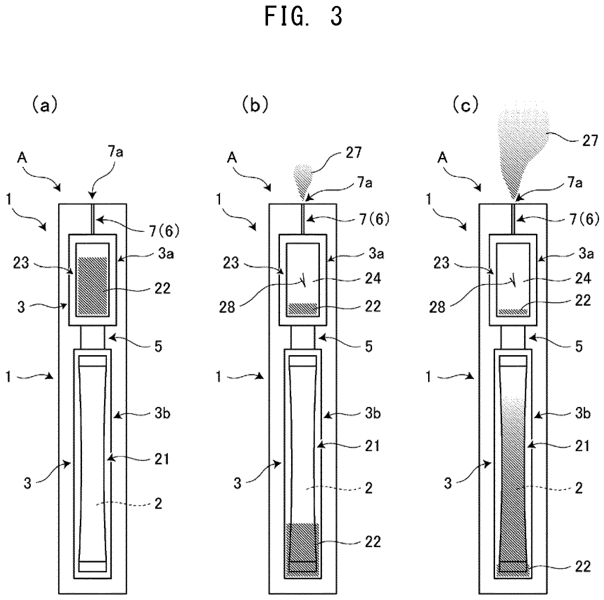

The hydrogen generation unit A according to this embodiment is formed as described above. Accordingly, as a procedure for generating a hydrogen gas 27, first, as shown in Fig. 2 and Fig. 3(a), in a state where the opening 7a of the hydrogen discharge port 7 is disposed on an upper side, the penetrating member 4 is pushed by a fingertip by way of the sealed film sheet 1b which covers the water accommodating chamber 3a so that the penetrating projection 4a breaks the easy-to-break portion 24 of the partitioned chamber 23 thus allowing the reaction water 22 to flow out through the break hole 28.

The reaction water 22 flown out from the partitioned chamber 23 flows into the agent accommodating chamber 3b through the movement passage 5 due to gravity as shown in Fig. 2, Fig. 3(b) and Fig. 3(c), and is brought into contact with the hydrogen generating agent 2 in the hydrogen generating body 21 by way of a nonwoven fabric forming a skin of the hydrogen generating body 21 thus generating hydrogen by a hydrogen generation reaction. The generated hydrogen gas 27 permeates the nonwoven fabric and rises to the movement passage 5 from the agent accommodating chamber 3b and, then, passes through the water accommodating chamber 3a and is discharged from the opening 7a of the hydrogen discharge port 7 through the narrowed passage 6.

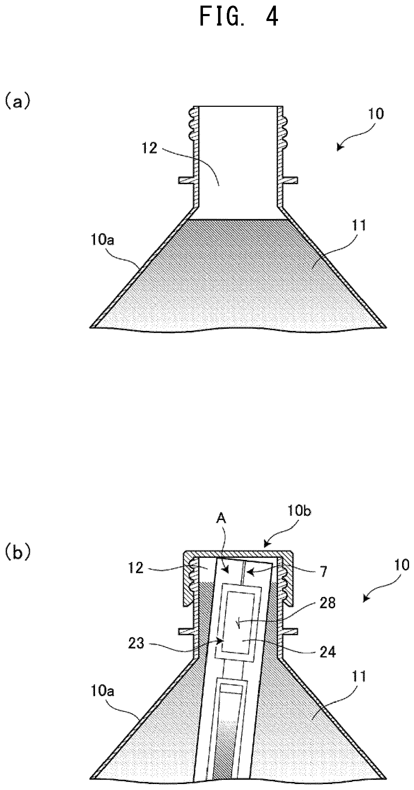

Accordingly, after the reaction water 22 is flown out through the break hole 28 by breaking the easy-to-break portion 24, as shown in Fig. 4(a) and Fig. 4(b), the hydrogen generation unit A is immersed into the drinking water 11 as a predetermined liquid stored in the preparation container 10 so that hydrogen is made to be contained in the drinking water 11 thus preparing a hydrogen-containing liquid.

The preparation container 10 is a PET bottle container of 500ml volume having pressure resistance which is used for putting carbonated water or the like on the market, and is formed of a hollow container body 10a and a screw cap 10b which seals the preparation container 10 air-tightly by being threadedly engaged with an upper opening of the container body 10a. In this embodiment, a PET bottle (a container made of polyethylene telephthalate) is used as the container. However, the container is not limited to a PET bottle, and a container made of glass or an aluminum material may be used as the container.

While the drinking water 11 is stored in the preparation container 10 up to a portion in the vicinity of a bottle neck portion (48/50 to 249/250 of an internal volume of the preparation container 10) thus forming a liquid phase portion, a gas phase portion is formed above the liquid phase portion as a gas remaining portion 12.

To be more specific, in a state where the opening 7a of the hydrogen discharge port 7 of the hydrogen generation unit A is disposed on an upper side, when the hydrogen generation unit A is immersed in the drinking water 11 through an opening portion of the preparation container 10 filled with the drinking water 11 and the preparation container 10 is closed by the screw cap 10b as shown in Fig. 4(b), a hydrogen gas is discharged while maintaining a state where the opening 7a of the hydrogen discharge port 7 is disposed on the upper side.

By setting a length of the hydrogen generation unit A to a length larger than an inner diameter of a barrel portion of the preparation container 10 into which the hydrogen generation unit A is put, it is possible to prevent a phenomenon where the hydrogen generation unit A is reversed or is brought into a lying state in the preparation container 10. The hydrogen generation unit A is configured to float on the drinking water 11 due to a space of the water accommodating chamber 3a and a space of the agent accommodating chamber 3b and a hydrogen gas filled in these spaces.

The discharged hydrogen gas fills the gas remaining portion 12 of the preparation container 10 while expanding so that the hydrogen gas is dissolved in the drinking water 11 along with the elevation of an internal pressure of the preparation container 10 thus preparing a hydrogen-containing liquid.

The hydrogen generation unit A according to this embodiment is configured such that, after the reaction water 22 is flown out by breaking of the easy-to-break portion 24, a hydrogen generation reaction is finished within approximately 10 to 15 minutes. Accordingly, when a user drinks a hydrogen-containing liquid immediately after the liquid is prepared, a liquid which contains hydrogen of approximately 5.0ppm can be produced such that an approximately center portion of the preparation container is gripped and hydrogen is agitated by quickly shaking the preparation container about a wrist by approximately 180° in the left-and-right direction for approximately 30 seconds.

When the preparation container 10 is left at rest in a refrigerator for approximately 24 hours after the hydrogen generation reaction is finished, and hydrogen is agitated as described above, a liquid which contains hydrogen of approximately 7.0ppm can be produced.

When the screw cap 10b is opened, an upper end portion of the hydrogen generation unit A appears in the vicinity of the opening portion of the preparation container 10 and hence, at the time of drinking a liquid, a user can easily remove the hydrogen generation unit A and drink the liquid.

Here, a favorable volume of the hydrogen generation unit A (on the premise that the drinking water 11 does not enter the accommodating body 1) is described. In general, the gas remaining portion 12 is present as described above in the preparation container 10 filled with the drinking water 11. The gas remaining portion 12 becomes a cause to lower a concentration of hydrogen contained in a liquid at the time of generating hydrogen. Accordingly, it is desirable that a volume of the gas remaining portion 12 be set as small as possible in a state where the hydrogen generation unit A is immersed in a liquid and the preparation container 10 is closed by the screw cap 10b.

In view of the above, it is desirable that a volume of the hydrogen generation unit A be set to a volume similar to an initial volume of the gas remaining portion 12 before the hydrogen generation unit A is immersed in the drinking water 11 or to a volume larger than the initial volume of the gas remaining portion 12. Accordingly, the hydrogen generation unit A according to this embodiment is formed such that the gas remaining portion 12 has a volume as described above and hence, the gas remaining portion 12 has a volume as small as possible as shown in Fig. 4(b).

It is also possible to adopt a method for minimizing a volume of the gas remaining portion 12 where a spacer member which is made of a material harmless to a living body and has a rectangular block shape, a bead shape or the like is additionally put into the preparation container 10.

As has been described heretofore, the hydrogen generation unit A according to this embodiment is the hydrogen generation unit A for producing a hydrogen-containing liquid where the hydrogen generation unit A is immersed in drinking water 11 and hydrogen is made to be contained in the drinking water 11, wherein the hydrogen generation unit A is configured such that the hydrogen generating agent 2 which generates hydrogen by being impregnated with water, the reaction water 22, and the non-flowout state maintaining unit which maintains the water 22 in a non-flowout state where the reaction water 22 does not react with the hydrogen generating agent 2 are accommodated in the accommodating body 1 having the hydrogen discharge port 7 formed of the tubular narrowed passage 6, and the non-flowout state maintaining unit is configured to change the water 22 in the non-flowout state into a flowout state where the reaction water 22 is reactable with the hydrogen generating agent 2 by applying a predetermined amount of energy to the accommodating body 1 from outside the accommodating body 1, whereby the reaction water 22 brought into the flowout state is made to react with the hydrogen generating agent 2 by being triggered by application of the energy and hydrogen generated in the accommodating body 1 is discharged through the hydrogen discharge port 7, and the hydrogen-containing liquid is produced without permeation of the drinking water 11 into the hydrogen generation unit A. Accordingly, it is possible to provide the hydrogen generation unit A which can produce a hydrogen-containing liquid more conveniently compared to a conventional hydrogen adding instrument.

The non-flowout state maintaining unit is the flexible partitioned chamber 23 which accommodates the reaction water 22 in a non-flowout state by hermetically accommodating the reaction water 22, and the partitioned chamber 23 includes the easy-to-break portion 24 which brings the reaction water 22 stored in the partitioned chamber 23 into a flowout state by discharging the reaction water 22 by being applied with a predetermined amount of an external force as the energy. Accordingly, it is possible to bring the reaction water 22 into a flowout state by merely pressing the partitioned chamber 23 from the outside of the accommodating body 1 with a fingertip by way of the penetrating member 4 and hence, a hydrogen generation reaction can be started extremely conveniently.

The accommodating chamber 3 includes the water accommodating chamber 3a and the agent accommodating chamber 3b, the water accommodating chamber 3a is formed in an upper portion of the accommodating body 1 and the partitioned chamber 23 and the penetrating member 4 on which the penetrating projection 4a having a sharpened distal end are accommodated in the water accommodating chamber 3a, the penetrating member 4 is accommodated in the water accommodating chamber 3a such that the penetrating projection 4a opposedly faces the easy-to-break portion of the partitioned chamber 23, and the agent accommodating chamber 3b is formed in a lower portion of the accommodating body 1, the hydrogen generating agent 2 is accommodated in the agent accommodating chamber 3b, the water accommodating chamber 3a and the agent accommodating chamber 3b are made to communicate with each other through the movement passage 5, and the narrowed passage 6 which makes the water accommodating chamber 3a and the outside communicate with each other is disposed above the water accommodating chamber 3a. Accordingly, the easy-to-break portion 24 is broken by merely pressing the partitioned chamber 23 by way of the water accommodating chamber 3a from the outside of the accommodating body 1 with a fingertip so that it is possible to bring the reaction water 22 into a flowout state where the reaction water 22 is flown out through the break hole 28. Further, it is possible to lower the reaction water 22 in the water accommodating chamber 3a in a flowout state due to gravity thus bringing the reaction water 22 into contact with the hydrogen generating agent 2 accommodated in the agent accommodating chamber 3b whereby hydrogen is generated. Still further, generated hydrogen can be discharged from an upper portion of the accommodating body 1 away from the hydrogen generating agent 2 and hence, it is possible to prevent the reaction water 22 which contains undesired ions generated due to the generation of hydrogen from flowing out into a liquid through the narrowed passage 6.

Next, modifications of the hydrogen generation unit A according to the first embodiment are described. Parts of the modifications of the hydrogen generation unit A substantially equal to corresponding parts of the above-mentioned hydrogen generation unit A according to the first embodiment are given the same symbols, and the description of such parts is omitted when appropriate.

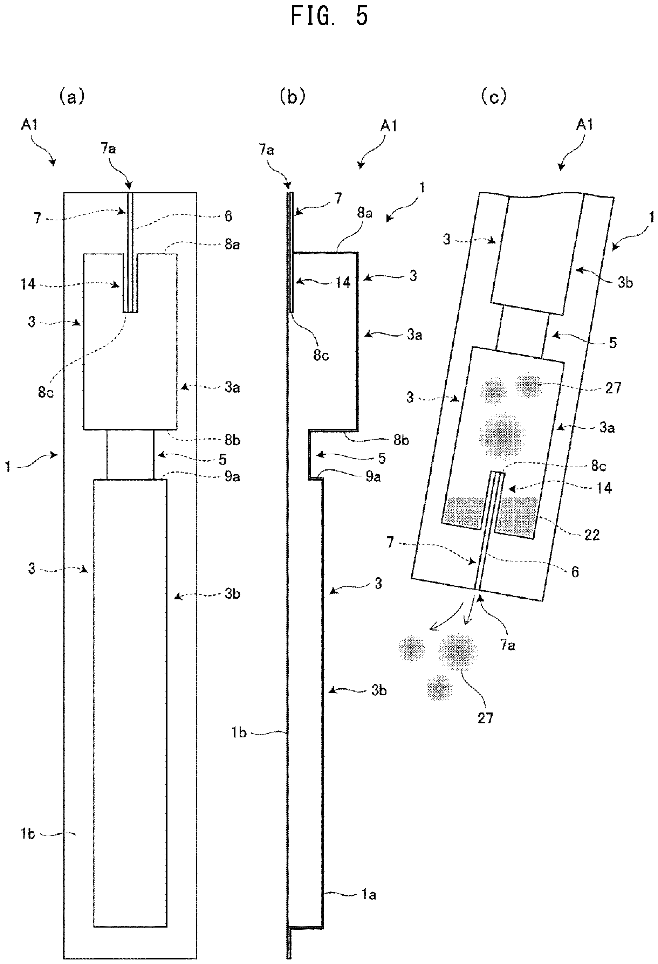

A hydrogen generation unit A1 according to a first modification is configured such that, as shown in Fig. 5(a) and Fig. 5(b), a hydrogen generating agent 2, a reaction water 22 and a non-flowout state maintaining unit are accommodated in an accommodating chamber 3 formed in an accommodating body 1, and a reverse flow preventing portion 14 is formed in a narrowed passage 6 which communicates with the accommodating chamber 3.

In Fig. 5(a) to Fig. 5(c), a partitioned chamber 23 and a penetrating member 4 which are accommodated in a water accommodating chamber 3a, and a hydrogen generating body 21 which is accommodated in an agent accommodating chamber 3b are omitted.

To be more specific, the water accommodating chamber 3a as the accommodating chamber 3 is formed such that an upper side wall 8a which communicates with the narrowed passage 6 is formed into a recessed shape as viewed in a front view, and a lower end portion of the narrowed passage 6 is made to communicate with a bottom portion 8c of the recessed shape. That is, the narrowed passage 6 extends to a portion inside the water accommodating chamber 3a.

By forming the water accommodating chamber 3a as described above, even when a hydrogen discharge port 7 of the hydrogen generation unit A1 is positioned on a lower side as shown in Fig. 5(c), it is possible to prevent a phenomenon that reaction water 22 flown out from the partitioned chamber 23 passes through the narrowed passage 6 and is discharged to the outside the hydrogen generation unit A1 through the opening 7a of the hydrogen discharge port 7.

Further, even when the drinking water 11 enter the accommodating body 1 through the hydrogen discharge port 7 at the time of putting the hydrogen generation unit A1 into a preparation container 10 or at the time of agitating the drinking water 11 in the preparation container 10, it is possible to prevent a phenomenon that the drinking water 11 which enters the accommodating body 1 from being discharged to the outside the accommodating body 1 again.

As described above, even when the reaction water 22 moves toward the outside of the accommodating body 1 through the narrowed passage 6 or the drinking water 11 outside the accommodating body 1 advances toward the inside of the accommodating body 1, the reverse flow of the reaction water 22 or the drinking water 11 can be prevented.

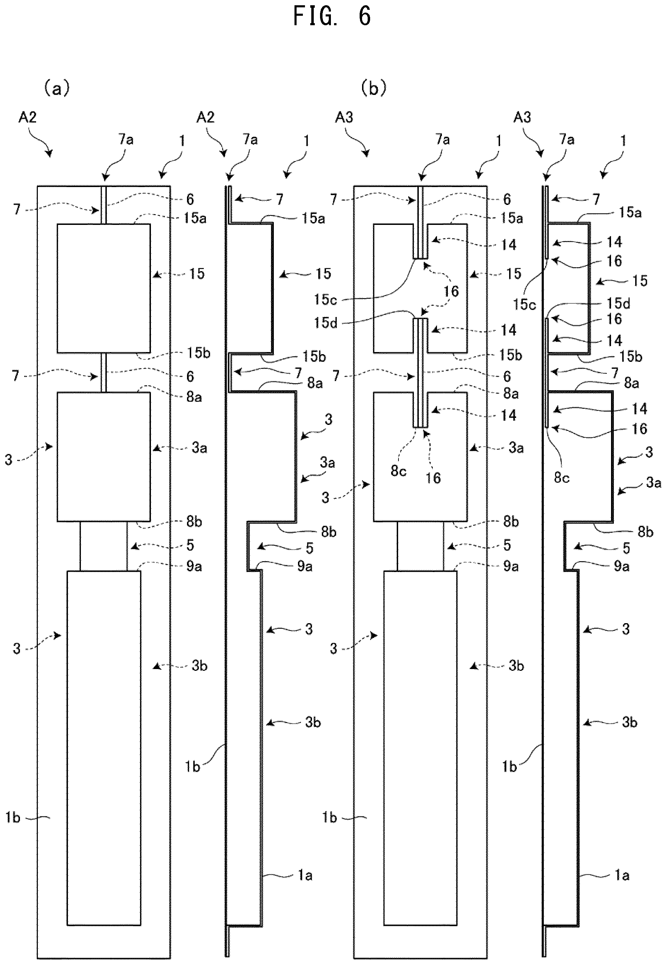

Next, a second modification is described. As shown in Fig. 6(a), a hydrogen generation unit A2 according to the second modification is formed such that, in a middle portion of the narrowed passage 6, a trap chamber 15 which stores reaction water 22 which possibly flows out from the inside of an accommodating body 1 or drinking water 11 which enters the accommodating body 1 from the outside of the accommodating body 1 is formed.

In Fig. 6(a), a partitioned chamber 23 and a penetrating member 4 which are accommodated in a water accommodating chamber 3a, and a hydrogen generating body 21 which is accommodated in an agent accommodating chamber 3b are omitted.

To be more specific, the trap chamber 15 is formed into a bottomed rectangular box shape, and is communicably connected to the narrowed passage 6 at a center of an open end portion of an upper side wall 15a. The trap chamber 15 is also communicably connected to the narrowed passage 6 at a center of an open end portion of a lower side wall 15b. That is, the hydrogen generation unit A2 is configured such that the trap chamber 15 is formed in the middle portion of the narrowed passage 6 in the hydrogen generation unit A according to the first embodiment. A shape of the water accommodating chamber 3a is not necessarily formed in a rectangular box shape.

By forming the trap chamber 15 as described above, even when the reaction water 22 moves toward the outside of the accommodating body 1 through the narrowed passage 6 or drinking water 11 outside the accommodating body 1 advances toward the inside of the accommodating body 1, the reaction water 22 or the drinking water 11 is stored in the trap chamber 15 and hence, it is possible to prevent the reaction water 22 containing undesired ions generated due to the generation of hydrogen from flowing out into the drinking water 11 through the narrowed passage 6, or to prevent the drinking water 11 from flowing into the inside of the accommodating body 1 thus affecting the generation of hydrogen.

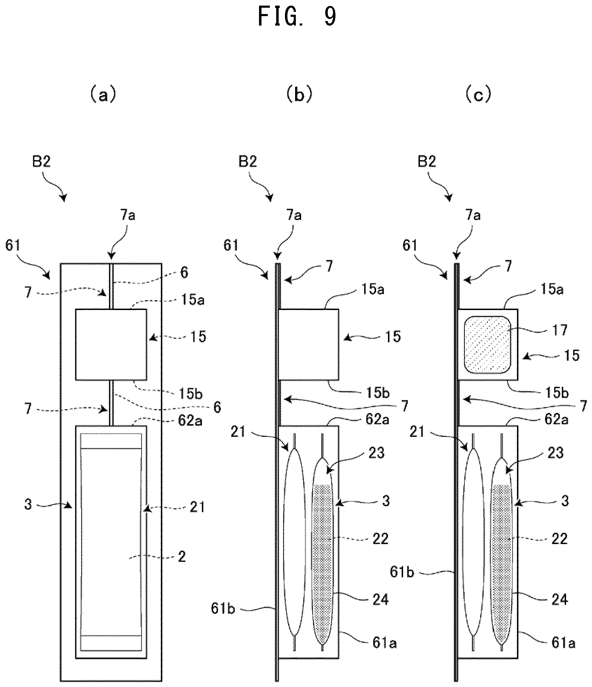

A water absorbent 17 (see Fig. 9(c)) made of a superabsorbent polymer which absorbs moisture may also be accommodated in the trap chamber 15. By accommodating the water absorbent 17 in the trap chamber 15, flowing out of the reaction water 22 to the outside of the accommodating body 1 and entering of the drinking water 11 from the outside of the accommodating body 1 can be prevented with more certainty.

Next, a third modification is described. As shown in Fig. 6(b), a hydrogen generation unit A3 according to the third modification is formed such that a reverse flow preventing portion 14 according to the first modification is formed by extending an end portion of the narrowed passage 6 into the inside of an accommodating chamber 3 and/or a trap chamber 15 at least at one portion of a communication base portion 16 between the accommodating chamber 3 and/or the trap chamber 15 and the narrowed passage 6.

In Fig. 6(b), a partitioned chamber 23 and a penetrating member 4 which are accommodated in a water accommodating chamber 3a, and a hydrogen generating body 21 which is accommodated in an agent accommodating chamber 3b are omitted.

The hydrogen generation unit A3 according to the third modification is formed such that the reverse flow preventing portion 14 according to the first modification formed in the water accommodating chamber 3a as the accommodating chamber 3 is also formed in the trap chamber 15. To be more specific, an upper side wall 15a of the trap chamber 15 which communicates with the narrowed passage 6 disposed on an upper portion side of the trap chamber 15 is formed into a recessed shape as viewed in a front view, and a lower end portion of the narrowed passage 6 is made to communicate with a bottom portion 15c of the recessed shape and, at the same time, a lower side wall 15b of the trap chamber 15 which communicates with the narrowed passage 6 disposed on a lower side is formed into a recessed shape as viewed in a front view, and an upper end portion of the narrowed passage 6 is made to communicate with a bottom portion 15d of an inverted recessed shape. That is, the narrowed passage 6 extends to a portion inside the trap chamber 15 and to a portion inside the water accommodating chamber 3 a.

By forming the hydrogen generation unit A3 as described above, even when an opening 7a of a hydrogen discharge port 7 of the hydrogen generation unit A3 is positioned on a lower side, it is possible to prevent a phenomenon that the reaction water 22 flown out from the partitioned chamber 23 passes through the narrowed passage 6 disposed on the lower portion and enters the trap chamber 15. Even when the reaction water 22 enters the trap chamber 15, it is possible to surely prevent a phenomenon that the reaction water 22 is discharged to the outside of the accommodating body 1 through the opening 7a of the hydrogen discharge port 7.

Even when the drinking water 11 enters the accommodating body 1 through the hydrogen discharge port 7 at the time of putting the hydrogen generation unit A3 into the preparation container 10 or at the time of agitating the drinking water 11 in the preparation container 10, it is possible to prevent not only a phenomenon that the drinking water 11 which enters the accommodating body 1 from being discharged to the outside the accommodating body 1 again but also a phenomenon that the drinking water 11 is flown into the inside of the agent accommodating chamber 3b thus affecting the generation of hydrogen.

As described above, even when the reaction water 22 moves toward the outside of the accommodating body 1 through the narrowed passage 6 or the drinking water 11 outside the accommodating body 1 advances toward the inside of the accommodating body 1, the reverse flow of the reaction water 22 or the drinking water 11 can be prevented with certainty.

A water absorbent 17 (see Fig. 9(c)) made of a superabsorbent polymer which absorbs moisture may also be accommodated in the trap chamber 15. By accommodating the water absorbent 17 in the trap chamber 15, flowing out of the reaction water 22 to the outside of the accommodating body 1 and entering of the drinking water 11 into the accommodating body 1 from the outside of the accommodating body 1 can be prevented with more certainty.

Next, a fourth modification is described. As shown in Fig. 7(a), a hydrogen generation unit A4 according to the fourth modification is formed such that the opening 7a of the hydrogen discharge port 7 of the hydrogen generation unit A according to the first embodiment is formed on a lower end portion of the hydrogen generation unit A4 by bending a narrowed passage 6.

In Fig. 7(a), a partitioned chamber 23 and a penetrating member 4 which are accommodated in a water accommodating chamber 3a, and a hydrogen generating body 21 which is accommodated in an agent accommodating chamber 3b are omitted.

To be more specific, the narrowed passage 6 is configured such that the narrowed passage 6 communicably connected to a center of an open end portion of an upper side wall 8a of a water accommodating chamber 3a extends upwardly, is bent to a left side at a right angle at a portion below an upper end portion of an accommodating body 1, and extends linearly toward a lower end portion of the accommodating body 1 at a position where the narrowed passage 6 does not interfere with two accommodating chambers 3a, 3b disposed below the narrowed passage 6. Accordingly, a left portion of a joint portion 1c of the accommodating body 1 is formed to have a larger width than a right portion of the joint portion 1c.

By forming the hydrogen generation unit A4 as described above, when the hydrogen generation unit A4 where a hydrogen generation reaction is started is immersed in drinking water 11 in a preparation container 10 in a state where the hydrogen discharge port 7 is disposed on a lower side, bubbles containing a large amount of hydrogen can be discharged into the drinking water 11 with certainty and hence, dissolving property of hydrogen to the drinking water 11 at an initial stage can he enhanced.

A generated hydrogen gas is extremely light so that the gas is discharged to the outside of the accommodating body 1 while routing around the inside of the accommodating body 1. On the other hand, the reaction water 22 containing undesired ions generated due to the generation of hydrogen is heavy so that the reaction water 22 cannot move upward from the agent accommodating chamber 3b disposed on a lower side where the hydrogen generating agent 2 is accommodated and hence, there is no possibility that the reaction water 22 flows out into the drinking water 11 from the opening 7a of the hydrogen discharge port 7 while passing through the narrowed passage 6 routing around the inside of the accommodating body 1.

Even when the drinking water 11 enters the narrowed passage 6, the narrowed passage 6 is formed with a large length and hence, the drinking water 11 which enters the narrowed passage 6 faces a hydrogen gas at a middle portion of the narrowed passage 6 along which the drinking water 11 advances toward the inside of the accommodating body 61. When the drinking water 11 faces a hydrogen gas, an energy of a discharged hydrogen gas is larger than an energy of the drinking water 11. Accordingly, there is no possibility that the drinking water 11 enters the agent accommodating chamber 3b and a hydrogen gas can be discharged to the outside without affecting the generation of hydrogen.

The formation of a reverse flow preventing portion 14 and a trap chamber 15 (see Fig. 7(d) and the like), the accommodation of a water absorbent 17 into the trap chamber 15 or the like according to the above-mentioned first to third modifications is also applicable to this modification.

Next, a fifth modification is described. As shown in Fig. 7(b), a hydrogen generation unit A5 according to the fifth modification is formed such that the narrowed passage 6 of the hydrogen generation unit A according to the first embodiment is formed with a large length.

In Fig. 7(b), a partitioned chamber 23 and a penetrating member 4 which are accommodated in a water accommodating chamber 3a, and a hydrogen generating body 21 which is accommodated in an agent accommodating chamber 3b are omitted.

To be more specific, the narrowed passage 6 of this modification is formed linearly with a length approximately five times as large as a length of the narrowed passage 6 of the hydrogen generation unit A according to the first embodiment. Accordingly, an upper portion of a joint portion 1c of the accommodating body 1 is formed in an upwardly extending manner. As shown in Fig. 7(e), the narrowed passage 6 may be formed into a curved shape, or a plurality of narrowed passages 6 may be formed.

By forming the hydrogen generation unit A5 as described above, while a generated hydrogen gas is discharged to the outside of the accommodating body 1 since the hydrogen gas is extremely light, the reaction water 22 containing undesired ions generated due to the generation of hydrogen is heavy so that the reaction water 22 cannot move upward from the agent accommodating chamber 3b disposed on a lower side where the hydrogen generating agent 2 is accommodated. Accordingly, there is no possibility that the reaction water 22 flows out into the drinking water 11 from the opening 7a of the hydrogen discharge port 7 while passing through the narrowed passage 6.

Even when the drinking water 11 enters the narrowed passage 6, the narrowed passage 6 is formed with a large length and hence, the drinking water 11 which enters the narrowed passage 6 faces a hydrogen gas at a middle portion of the narrowed passage 6 along which the drinking water 11 advances toward the inside of the accommodating body 61. When the drinking water 11 faces a hydrogen gas, an energy of a discharged hydrogen gas is larger than an energy of the drinking water 11. Accordingly, there is no possibility that the drinking water 11 enters the agent accommodating chamber 3b and a hydrogen gas can be discharged to the outside without affecting the generation of hydrogen.

Further, the hydrogen generation unit A5 is formed with a large length and hence, it is possible to surely prevent that the hydrogen generation unit A5 is reversed or is brought into a lying state in the preparation container 10. Further, the hydrogen generation unit A5 can easily project upwardly from an opening portion of the preparation container 10 when a screw cap 10b is opened after a hydrogen-containing liquid is prepared. Accordingly, a removal operation of the hydrogen generation unit A5 can be more facilitated.

The formation of a reverse flow preventing portion 14 and a trap chamber 15, the accommodation of a water absorbent 17 into the trap chamber 15 or the like according to the above-mentioned first to third modifications is also applicable to this modification.

Next, a sixth modification is described. As shown in Fig. 7(c), a hydrogen generation unit A6 according to the sixth modification is formed to have a large length as a whole by extending a lower portion of the joint portion 1c of the agent accommodating chamber 3b in the hydrogen generation unit A5 according to the fifth modification so that the hydrogen generation unit A6 has a height substantially equal to the height of a preparation container 10.

In Fig. 7(c), a partitioned chamber 23 and a penetrating member 4 which are accommodated in a water accommodating chamber 3a, and a hydrogen generating body 21 which is accommodated in an agent accommodating chamber 3b are omitted.

By forming the hydrogen generation unit A6 as described above, it is possible to surely prevent that the hydrogen generation unit A6 is reversed or is brought into a lying state in the preparation container 10. Further, the hydrogen generation unit A6 can easily project upwardly from an opening portion of the preparation container 10 when a screw cap 10b is opened after a hydrogen-containing liquid is prepared. Accordingly, a removal operation of the hydrogen generation unit A6 can be more facilitated.

The formation of a reverse flow preventing portion 14 and a trap chamber 15, the accommodation of a water absorbent 17 into the trap chamber 15 or the variations of the narrowed passage 6 according to the above-mentioned first to fifth modifications is also applicable to this modification.

Next, a hydrogen generation unit B according to a second embodiment is described. Parts of the hydrogen generation unit B substantially equal to corresponding parts of the above-mentioned hydrogen generation units A, A1 to A6 according to the above-mentioned first embodiment or the modifications are given the same symbols, and the description of such parts is omitted when appropriate.

### [Second embodiment]

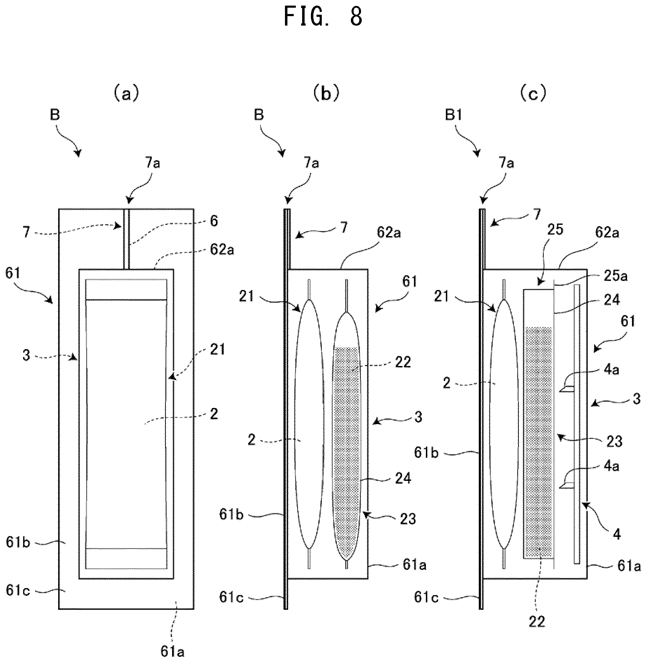

As shown in Fig. 8(a), (b), a hydrogen generation unit B according to a second embodiment for producing a hydrogen-containing liquid where the hydrogen generation unit B is immersed in a drinking water 11 and hydrogen is made to be contained in the drinking water 11, wherein the hydrogen generation unit B is configured such that a hydrogen generating agent 2 which generates hydrogen by being impregnated with water, the reaction water 22, and a non-flowout state maintaining unit which maintains the reaction water 22 in a non-flowout state where the reaction water 22 does not react with the hydrogen generating agent 2 are accommodated in an accommodating body 1 having a hydrogen discharge port 7 formed of a tubular narrowed passage 6, and the non-flowout state maintaining unit is configured to change the reaction water 22 in the non-flowout state into a flowout state where the reaction water 22 is reactable with the hydrogen generating agent 2 by applying a predetermined amount of energy to the accommodating body 1 from outside the accommodating body 61, whereby the reaction water 22 brought into the flowout state is made to react with the hydrogen generating agent 2 by being triggered by application of the energy and hydrogen generated in the accommodating body 61 is discharged through the hydrogen discharge port 7, and the hydrogen-containing liquid is produced without permeation of the drinking water 11 into the hydrogen generation unit B.

The non-flowout state maintaining unit is a flexible partitioned chamber 23 which accommodates the reaction water 22 in a non-flowout state by hermetically accommodating the reaction water 22, and the partitioned chamber 23 includes an easy-to-break portion 24 which brings the reaction water 22 into a flowout state by discharging reaction water 22 stored in the partitioned chamber 23 by being applied with a predetermined amount of an external force as the energy.

The hydrogen generating agent 2, the reaction water 22 and the non-flowout state maintaining unit are accommodated in the accommodating chamber 3 formed in the accommodating body 61, and the hydrogen discharge port 7 which makes the inside of the accommodating chamber 3 and the outside communicate with each other is formed on an upper portion of the accommodating chamber 3.

To be more specific, the accommodating body 61 is formed with a width which allows the accommodating body 61 to be put into a preparation container 10 from an opening portion of the preparation container 10. The accommodating body 61 is formed of a casing portion 61a and a sealed film sheet 61b. The casing portion 61 a is formed such that a strip-shaped plastic sheet is indented from a front surface side to a rear side thus forming the narrowed passage 6 and an accommodating chamber 3, and the narrowed passage 6 and the accommodating chamber 3 are disposed from an upper portion to a lower portion of the casing portion 61a in a communicable manner. A joint portion 1c is formed of a front surface of a flat outer edge portion of the casing portion 61 a which is not indented. The sealed film sheet 61b is a strip-shaped film sheet welded to the joint portion 1c thus sealing the respective indented portions.

The partitioned chamber 23 which accommodates the reaction water 22 and a hydrogen generating body 21 which embraces the hydrogen generating agent 2 are accommodated in the accommodating chamber 3.

It is sufficient that a depth of the accommodating chamber 3 be set to a depth which allows the accommodating chamber 3 to accommodate the partitioned chamber 23 and the hydrogen generating body 21 described later.

The accommodating chamber 3 is formed into a bottomed rectangular box shape having a longitudinal direction thereof extending in a vertical direction, and is communicably connected to the narrowed passage 6 at a center of an open end portion of an upper side wall 62a. A shape of the accommodating chamber 3 is not necessarily limited to a rectangular box shape.

The narrowed passage 6 and the accommodating chamber 3 formed as described above form the casing portion 61a as a whole with a flat outer edge portion which surrounds the narrowed passage 6 and the accommodating chamber 3a used as the joint portion 61c, and the above-mentioned respective portions are sealed by welding the strip-shaped sealed film sheet 61b to the joint portion 61c thus forming the accommodating body 61.

The following members are accommodated in the hermetically sealed accommodating chamber 3 thus forming the hydrogen generation unit B.

First, the partitioned chamber 23 which embraces the reaction water 22 accommodated in the accommodating chamber 3 is formed such that a film-like sheet is formed into a sleeve shape, and both end opening portions are joined by welding so that the sheet is formed into a bag shape. In forming the partitioned chamber 23, after one opening portion is welded, the reaction water 22 is filled into the partitioned chamber 23 from the other opening portion and, thereafter, the other opening portion is welded thus forming the partitioned chamber 23 in a watertight state. In this embodiment, filling of the reaction water 22 into the partitioned chamber 23 is performed in a clean room so as to embrace the reaction water 22 in the partitioned chamber 23 in a sterile condition possible.

The whole partitioned chamber 23 forms the easy-to-break portion 24. Polyester which is a transparent plastic film material having favorable airtightness is used as a material for forming the easy-to-break portion 24. However, provided that a material does not allow the reaction water 22 inside the easy-to-break portion 24 to permeate to the outside of the easy-to-break portion 24 and is easily broken, a material for forming the easy-to-break portion 24 or transparency of the material is not particularly limited, and a film material which uses a synthetic resin material such as orientation polypropylene (OPP) or polyethylene as a base material or the like may be used. That is, the easy-to-break portion 24 is formed such that any portion of the easy-to-break portion 24 is broken by being pushed with a predetermined surface pressure without using a separate member such as a penetrating member having a sharpened distal end portion.

The partitioned chamber 23 is accommodated in a bottom portion of the accommodating chamber 3, and the hydrogen generating body 21 which accommodates the hydrogen generating agent 2 is disposed on the partitioned chamber 23 in an overlapping manner. It is desirable that the partitioned chamber 23 and the hydrogen generating body 21 respectively have an outer shape which prevents the unnecessary movement thereof in the accommodating chamber 3.

The partitioned chamber 23 per se forms the non-flowout state maintaining unit. In the accommodating chamber 3 which accommodates the partitioned chamber 23 and the hydrogen generating body 21, by pushing the sealed film sheet 61b which seals the casing portion 61a by a fingertip from the outside the accommodating body 61, the partitioned chamber 23 (easy-to-break portion 24) is broken by way of the hydrogen generating body 21 so that the reaction water 22 embraced in the partitioned chamber 23 can be brought into a flowout state. That is, an external force by a fingertip is used as an energy, and the reaction water 22 can be changed to a flowout state from a non-flowout state by being triggered by application of the energy.

When the reaction water 22 brought into a flowout state is brought into contact with the hydrogen generating agent 2 by way of the hydrogen generating body 21, a hydrogen generation reaction is started so that hydrogen is generated.

The hydrogen generation unit B according to this embodiment is formed as described above. Accordingly, as a procedure for generating a hydrogen gas, first, as shown in Fig. 8(a) and Fig. 8(b), in a state where the opening 7a of the hydrogen discharge port 7 is disposed on an upper side, the hydrogen generating body 21 is pushed by a fingertip by way of the sealed film sheet 61b which covers the accommodating chamber 3 so that the partitioned chamber 23 (easy-to-break portion 24) is broken thus allowing the reaction water 22 to flow out.

The reaction water 22 flown out from the partitioned chamber 23 stays in the accommodating chamber 3, is brought into contact with the hydrogen generating agent 2 in the hydrogen generating body 21 by way of a nonwoven fabric forming a skin of the hydrogen generating body 21 thus generating hydrogen by a hydrogen generation reaction. The generated hydrogen gas permeates the nonwoven fabric, rises from the accommodating chamber 3, and is discharged from the opening 7a of the hydrogen discharge port 7 through the narrowed passage 6.

Accordingly, as described in the first embodiment, after the reaction water 22 is flown out by breaking the easy-to-break portion 24, as shown in Fig. 4(a) and Fig. 4(b), the hydrogen generation unit B is immersed into the drinking water 11 as a predetermined liquid stored in the preparation container 10 so that hydrogen is made to be contained in the drinking water 11 thus preparing a hydrogen-containing liquid.

By setting a length of the hydrogen generation unit B to a length larger than an inner diameter of a barrel portion of the preparation container 10 into which the hydrogen generation unit B is put, it is possible to prevent a phenomenon where the hydrogen generation unit B is reversed or is brought into a lying state in the preparation container 10. The hydrogen generation unit B is configured to float on the drinking water 11 due to a space of the accommodating chamber 3 and a hydrogen gas filled in the space.

In the same manner as the hydrogen generation unit A according to the first embodiment, the hydrogen generation unit B according to this embodiment is configured such that, after the reaction water 22 is flown out by breaking the easy-to-break portion 24 (partitioned chamber 23), a hydrogen generation reaction is finished within approximately 10 to 15 minutes. Accordingly, when a user drinks a hydrogen-containing liquid immediately after the liquid is prepared, a liquid which contains hydrogen of approximately 5.0ppm can be produced such that an approximately center portion of the preparation container is grasped and hydrogen is agitated by quickly shaking the preparation container about a wrist by approximately 180° in the left-and-right direction for approximately 30 seconds.

When the preparation container 10 is left at rest in a refrigerator for approximately 24 hours after the hydrogen generation reaction is finished, and hydrogen is agitated as described above, a liquid which contains hydrogen of approximately 7.0ppm can be produced.

When a screw cap 10b is opened at the time of drinking a liquid, an upper end portion of the hydrogen generation unit B appears in the vicinity of the opening portion of the preparation container 10 and hence, a user can easily remove the hydrogen generation unit B and drink the liquid.

As has been described heretofore, the hydrogen generation unit B according to this embodiment is the hydrogen generation unit B for producing a hydrogen-containing liquid where the hydrogen generation unit B is immersed in the drinking water 11 and hydrogen is made to be contained in the drinking water 11, wherein the hydrogen generation unit B is configured such that the hydrogen generating agent 2 which generates hydrogen by being impregnated with water, the reaction water 22, and the non-flowout state maintaining unit which maintains the reaction water 22 in a non-flowout state where the reaction water 22 does not react with the hydrogen generating agent 2 are accommodated in the accommodating body 61 having the hydrogen discharge port 7 formed of the tubular narrowed passage 6, and the non-flowout state maintaining unit is configured to change the reaction water 22 in the non-flowout state into a flowout state where the reaction water 22 is reactable with the hydrogen generating agent 2 by applying a predetermined amount of energy to the accommodating body 61 from outside the accommodating body 61, whereby the reaction water 22 brought into the flowout state is made to react with the hydrogen generating agent 2 by being triggered by application of the energy and hydrogen generated in the accommodating body 61 is discharged through the hydrogen discharge port 7, and the hydrogen-containing liquid is produced without permeation of the drinking water 11 into the hydrogen generation unit B. Accordingly, it is possible to provide the hydrogen generation unit B which can produce a hydrogen-containing liquid more conveniently compared to a conventional hydrogen adding instrument.

The non-flowout state maintaining unit is the flexible partitioned chamber 23 which accommodates the reaction water 22 in a non-flowout state by hermetically accommodating the reaction water 22, and the partitioned chamber 23 includes the easy-to-break portion 24 which brings the reaction water 22 stored in the partitioned chamber 23 into a flowout state by discharging the reaction water 22 by being applied with a predetermined amount of an external force as the energy. Accordingly, it is possible to bring the reaction water 22 into a flowout state by merely pressing the partitioned chamber 23 from the outside of the accommodating body 61 with a fingertip, for example, by way of the hydrogen generating body 21 and hence, a hydrogen generation reaction can be started extremely conveniently.

The hydrogen generating agent 2, the reaction water 22 and the non-flowout state maintaining unit are accommodated in the accommodating chamber 3 formed in the accommodating body 61, and the narrowed passage 6 which makes the inside of the accommodating chamber 3 and the outside communicate with each other is formed on an upper portion of the accommodating chamber 3. Accordingly, the accommodating chamber 3 can be formed of one chamber and hence, the structure of the hydrogen generation unit B is simplified so that the accommodating chamber 3 can be easily manufactured at a low cost.

The hydrogen generating body 21 and the partitioned chamber 23 are accommodated in the same accommodating chamber 3 in an overlapping manner and hence, the reaction water 22 flown out from the partitioned chamber 23 can efficiently contribute to a hydrogen generation reaction.

Next, modifications of the hydrogen generation unit B according to the second embodiment are described. In the description made hereinafter, the description and illustration of various variations of the above-mentioned reverse flow preventing portion 14 and narrowed passage 6 are omitted. However, in the same manner as the respective modifications of the first embodiment, the narrowed passage 6 may be formed at required portions when necessary and various variations of the narrowed passage 6 may be adopted. The modifications of the hydrogen generation unit B according to the second embodiment can acquire substantially the same advantageous effect as the second embodiment.

Parts of the modifications of the hydrogen generation unit B substantially equal to corresponding parts of the above-mentioned hydrogen generation unit A, A1 to A6, B according to the first embodiment, the second embodiment or the modifications are given the same symbols, and the description of such parts is omitted when appropriate.

As shown in Fig. 8(c), a hydrogen generation unit B1 according to a seventh modification is formed such that a hydrogen generating agent 2, a reaction water 22 and a non-flowout state maintaining unit are accommodated in an accommodating chamber 3 formed in an accommodating body 61, and a penetrating member 4 is also accommodated in the accommodating chamber 3.

To be more specific, two penetrating projections 4a are formed on the penetrating member 4 such that the penetrating projections 4a are spaced apart from each other by a predetermined distance in a vertical direction, and the penetrating member 4 is accommodated in a bottom portion of the accommodating chamber 3 such that the penetrating projections 4a are disposed on an opening side of the accommodating chamber 3. The partitioned chamber 23 according to the first embodiment is disposed on the penetrating member 4 in an overlapping manner such that the penetrating projections 4a opposedly face the easy-to-break portion 24, and the hydrogen generating body 21 is disposed on the easy-to-break portion 24 in an overlapping manner.

By forming the hydrogen generation unit B1 as described above, the reaction water 22 can be brought into a flowout state where the reaction water 22 is flown out through break holes by surely breaking the easy-to-break portions 24 using the penetrating projections 4a. When the penetrating projections 4a are formed at positions on a lower portion side of the penetrating member 4, most of the reaction water 22 embraced in the partitioned chamber 23 can be flown out into the accommodating chamber 3 and hence, the reaction water 22 can efficiently contribute to a hydrogen generation reaction.

In the seventh modification, the penetrating member 4, the partitioned chamber 23 and the hydrogen generating body 21 are arranged in an overlapping manner in this order from a bottom portion side of the accommodating chamber 3. However, the order of the arrangement is not limited to the order in this modification. For example, the penetrating member 4, the partitioned chamber 23 and the hydrogen generating body 21 may be disposed in an overlapping manner by reversing the order, or the penetrating member 4 may be disposed between the partitioned chamber 23 and the hydrogen generating body 21.

Next, an eighth modification is described. As shown in Fig. 9(a) and Fig. 9(b), a hydrogen generation unit B2 according to the eighth modification is configured such that, in the hydrogen generation unit B according to the second embodiment, a trap chamber 15 which stores a reaction water 22 which possibly flows out from the inside of an accommodating body 61 and a drinking water 11 which enters an accommodating body 61 from the outside of the accommodating body 61 is formed in a middle portion of a narrowed passage 6.

By forming the hydrogen generation unit B2 as described above, even when the reaction water 22 moves to the outside of the accommodating body 61 through the narrowed passage 6 or the drinking water 11 outside the accommodating body 61 advances toward the inside of the accommodating body 61, the reaction water 22 and the drinking water 11 are stored in the trap chamber 15. Accordingly, it is possible to prevent the reaction water 22 which contains undesired ions generated due to the generation of hydrogen from flowing out into a drinking water 11 through the narrowed passage 6, and the drinking water 11 from flowing into the inside of the accommodating body 61 thus affecting the generation of hydrogen.

As shown in Fig. 9(c), a water absorbent 17 made of a superabsorbent polymer which absorbs moisture may also be accommodated in the trap chamber 15. By accommodating the water absorbent 17 in the trap chamber 15, flowing out of the reaction water 22 to the outside of the accommodating body 1 and entering of the reaction water 22 into the drinking water 11 from the outside of the accommodating body 1 can be prevented with more certainty.

It is needless to say that the reverse flow preventing portion 14 may be formed in the accommodating chamber 3 or the trap chamber 15.

Next, a hydrogen generation unit C according to a third embodiment is described. In the description made hereinafter, the description and illustration of various variations of the above-mentioned reverse flow preventing portion 14, trap chamber 15 and narrowed passage 6 are omitted. However, in the same manner as the respective modifications of the first and second embodiments, the trap chamber 15 may be formed, the reverse flow preventing portion 14 may be formed in the trap chamber 15, the narrowed passage 6 may be formed at required portions when necessary, and various variations of the narrowed passage 6 may be adopted. The modifications of the hydrogen generation unit C according to the third embodiment can acquire substantially the same advantageous effect as the second embodiment.

Parts of the hydrogen generation unit C substantially equal to corresponding parts of the above-mentioned hydrogen generation unit A, A1 to A6, B, B7, B8 according to the first embodiment, the second embodiment or the modifications are given the same symbols, and the description of such parts is omitted when appropriate.

### [Third embodiment]

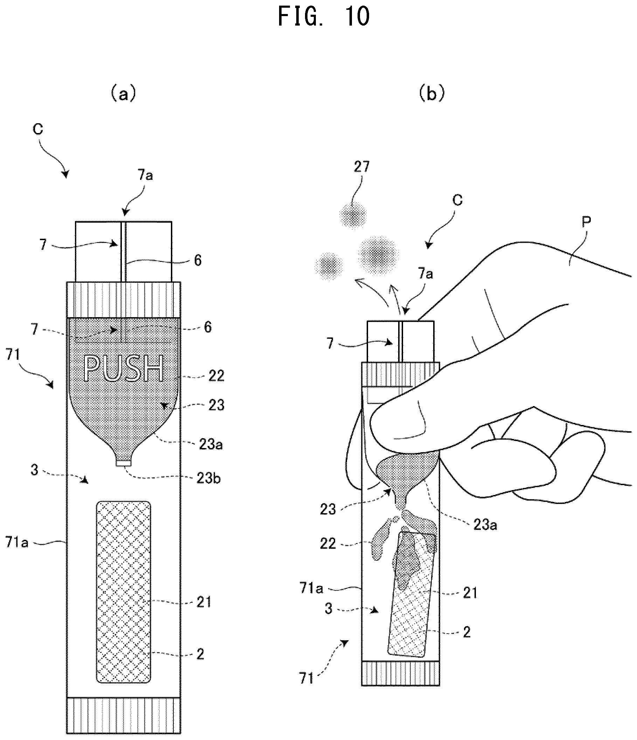

As shown in Fig. 10(a) and Fig. 10(b), a hydrogen generation unit C for producing a hydrogen-containing liquid where the hydrogen generation unit C is immersed in drinking water 11 and hydrogen is made to be contained in the drinking water 11, wherein the hydrogen generation unit C according to a third embodiment is configured such that a hydrogen generating agent 2 which generates hydrogen by being impregnated with water, reaction water 22, and a non-flowout state maintaining unit which maintains the reaction water 22 in a non-flowout state where the reaction water 22 does not react with the hydrogen generating agent 2 are accommodated in an accommodating body 71 having a hydrogen discharge port 7 formed of a tubular narrowed passage 6, and the non-flowout state maintaining unit is configured to change the reaction water 22 in the non-flowout state into a flowout state where the reaction water 22 is reactable with the hydrogen generating agent 2 by applying a predetermined amount of energy to the accommodating body 71 from outside the accommodating body 71, whereby the reaction water 22 brought into the flowout state is made to react with the hydrogen generating agent 2 by being triggered by application of the energy and hydrogen generated in the accommodating body 71 is discharged through the hydrogen discharge port 7, and the hydrogen-containing liquid is produced without permeation of the drinking water 11 into the hydrogen generation unit C.

The non-flowout state maintaining unit is a flexible partitioned chamber 23 which accommodates the reaction water 22 in a non-flowout state by hermetically accommodating the reaction water 22, and the partitioned chamber 23 includes an easy-to-break portion 23b which brings the reaction water 22 into a flowout state by discharging the reaction water 22 stored in the partitioned chamber 23 by being applied with a predetermined amount of an external force as the energy.

Further, the hydrogen generating agent 2, the reaction water 22 and the non-flowout state maintaining unit are accommodated in the accommodating chamber 3 which defines an internal space of the bag-shaped accommodating body 71 made of a film-like sheet material having flexibility and extremely high moisture-proof, and the narrowed passage 6 which communicates with the outside from the accommodating chamber 3 is provided to an upper portion of the accommodating chamber 3.

To be more specific, the accommodating body 71 is formed with a width which allows the accommodating body 71 to be put into a preparation container 10 from an opening portion of the preparation container 10, and is a hermetically-sealed bag body 71 a obtained by forming a film-like sheet material having heat resistance into a tubular shape and by sealing both ends of the tubular-shaped film-like sheet material. Further, as shown in Fig. 1(a) for example, on one end portion of the accommodating body 71, using a portion including the hydrogen discharge port 7 formed of a tubular narrowed passage 6 formed in the hydrogen generation unit A according to the first embodiment as it is, the portion and the end portion of the accommodating body 71 are integrally sealed such that one end portion of the narrowed passage 6 communicates with the accommodating chamber 3.

A transparent plastic film made of orientation polypropylene (OPP) having excellent heat resistance, impact resistance and airtightness is used as a material for forming the bag body 71 a as the accommodating body 71. However, provided that a material does not allow the drinking water 11 outside the bag body 71a to permeate into the bag body 71a and does not allow the reaction water 22 inside the bag body 71a to permeate to the outside of the bag body 71 a, the material for forming the bag body 71a and transparency of the material are not particularly limited, and a sheet material which uses a plastic material such as polyethylene as a base material or the like may be used.

The narrowed passage 6 does not communicate with the partitioned chamber 23, and is sealed in a state where the narrowed passage 6 is made to overlap with an outer surface of the partitioned chamber 23 and hence, the hydrogen generation unit C is configured such that the accommodating chamber 3 and the outside are communicated with each other through the opening 7a of the hydrogen discharge port 7 disposed on the other end portion of the narrowed passage 6.

The partitioned chamber 23 is a portion which functions as a non-flowout state maintaining unit for maintaining the reaction water 22 in a non-flowout state where the reaction water 22 does not react with the hydrogen generating agent 2 in the hydrogen generating body 21, and is formed by partitioning the accommodating chamber 3 water-tightly by the partitioned-chamber sealing portion 23a.

Further, on a portion of the partitioned-chamber sealing portion 23a, the easy-to-break portion 23b which is formed by lowering a sealing strength of the portion of the partitioned-chamber sealing portion 23a while maintaining water tightness is formed.

As shown in Fig. 10(b), the easy-to-break portion 23b is formed with a sealing strength which enables the communication of the inside and the outside of the partitioned chamber 23 in the accommodating chamber 3 due to a pressure applied when a user P pushes a portion of the accommodating body 71 corresponding to the partitioned chamber 23 with his fingers. By applying an external force as described above to the accommodating body 71, the reaction water 22 can be brought into a flow-out state by discharging the reaction water 23 through the easy-to-break portion 23b.

That is, using the external force by the fingers as energy, the reaction water 22 can be changed into the flowout state from the non-flowout state by being triggered by application of such energy, and the reaction water 22 which is brought into the flowout state is borough into contact with the hydrogen generating agent 2 by way of the hydrogen generating body 21 in the inside of the accommodating chamber 3 so that the hydrogen generation reaction is started thus generating hydrogen.

The hydrogen generation unit C according to this embodiment is configured as described above. Accordingly, after the reaction water 22 is flown out due to the peeling-off off of the easy-to-break portion 23b, as described in the first embodiment, by immersing the hydrogen generation unit C into the drinking water 11 accommodated in the preparation container 10 as shown in Fig. 4(a) and Fig. 4(b), hydrogen is made to be contained in the drinking water 11 thus preparing the hydrogen-containing liquid.

Further, the hydrogen generation unit C is configured to float in the drinking water 11 due to a hydrogen gas fully filled in the accommodating chamber 3.

In the same manner as the hydrogen generation unit C according to the first embodiment, the hydrogen generation unit C according to this embodiment is also configured to finish the hydrogen generation reaction in approximately 10 to 15 minutes after the reaction water 22 is flown out due to the peeling-off of the easy-to-break portion 23b. When a user wants to drink the hydrogen-containing liquid immediately after the preparation of the hydrogen-containing water, the user can produce a hydrogen-containing liquid of an approximately 5.0ppm by gripping an approximately center portion of the preparation container and by quickly shaking the preparation container leftward and rightward by approximately 180° about his wrist for approximately 30 seconds.

Further, the hydrogen generation unit C is configured to produce a hydrogen-containing liquid of approximately 7.0ppm by leaving the hydrogen-containing liquid at rest in a refrigerator for approximately 24 hours after the hydrogen generation reaction is finished and by agitating the hydrogen-containing liquid as described above.

At the time of drinking the hydrogen-containing liquid, by opening a screw cap 10b, the hydrogen generation unit C appears in the vicinity of the opening portion of the preparation container 10 and hence, the user can drink the hydrogen-containing liquid by easily removing the hydrogen generation unit C.

As described above, the hydrogen generation unit C for producing a hydrogen-containing liquid where the hydrogen generation unit C is immersed in the drinking water 11 and hydrogen is made to be contained in the drinking water 11, wherein the hydrogen generation unit C according to this embodiment is configured such that the hydrogen generating agent 2 which generates hydrogen by being impregnated with water, the reaction water 22, and the non-flowout state maintaining unit which maintains the reaction water 22 in a non-flowout state where the reaction water 22 does not react with the hydrogen generating agent 2 are accommodated in the accommodating body 71 having the hydrogen discharge port 7 formed of the tubular narrowed passage 6, and the non-flowout state maintaining unit is configured to change the reaction water 22 in the non-flowout state into the flowout state where the reaction water 22 is reactable with the hydrogen generating agent 2 by applying a predetermined amount of energy to the accommodating body 71 from outside the accommodating body 71, whereby the reaction water 22 brought into the flowout state is made to react with the hydrogen generating agent 2 by being triggered by application of the energy and hydrogen generated in the accommodating body 71 is discharged through the hydrogen discharge port 7, and the hydrogen-containing liquid is produced without permeation of the drinking water 11 into the hydrogen generation unit C. Accordingly, it is possible to provide the hydrogen generation unit C which can produce a hydrogen-containing liquid more easily compared to the conventional hydrogen adding instrument.

Further, the non-flowout state maintaining unit is the flexible partitioned chamber 23 which accommodates the reaction water 22 in a non-flowout state by hermetically accommodating the reaction water 22, and the partitioned chamber 23 includes the easy-to-break portion 23b which brings the reaction water 22 into a flowout state by discharging the reaction water 22 stored in the partitioned chamber 23 by being applied with a predetermined amount of an external force as the energy and hence, the reaction water 22 can be brought into a flowout state by merely pushing the partitioned chamber 23 by way of the hydrogen generating body 21 from the outside of the accommodating body 71 with finger tips or the like, for example, thus starting the hydrogen generation reaction extremely simply.

The hydrogen generating agent 2, the reaction water 22 and the non-flowout state maintaining unit are accommodated in the accommodating chamber 3 which defines the internal space of the bag body 71a as the accommodating body 71 made of a film-like sheet material having flexibility and extremely high moisture-proof, and the narrowed passage 6 which communicates with the outside from the accommodating chamber 3 is provided to the upper portion of the accommodating chamber 3 and hence, the accommodating chamber 3 can be constituted of a single chamber so that the structure of the hydrogen generation unit C can be simplified thus manufacturing the hydrogen generation unit C easily and at a low cost.

Further, the hydrogen generating body 21 and the partitioned chamber 23 are accommodated in the same accommodating chamber 3 and hence, the reaction water 22 flown out from the partitioned chamber 23 can be efficiently contributed to the hydrogen generation reaction.

Next, a hydrogen generation unit D according to a fourth embodiment is described. In the following description, the description and illustration of various variations of the above-mentioned reverse flow preventing portion 14, trap chamber 15, and narrowed passage 6 are omitted. However, due to the formation of the trap chamber 15 in the same manner as the respective modifications of the first and second embodiments, the formation of the reverse flow preventing portion 14 in the trap chamber 15, the suitable formation of the narrowed passage 6 on a necessary portion, and the application of various variations of the narrowed passage 6, the hydrogen generation unit D can also acquire the same advantageous effects as the above-mentioned first and second embodiments.

In this embodiment, parts in common with the hydrogen generation units A, A1 to A6, B, B7, B8 and C according to the above-mentioned first to third embodiments and modifications are given the same symbols, and their description is omitted when appropriate.

### [Fourth embodiment]

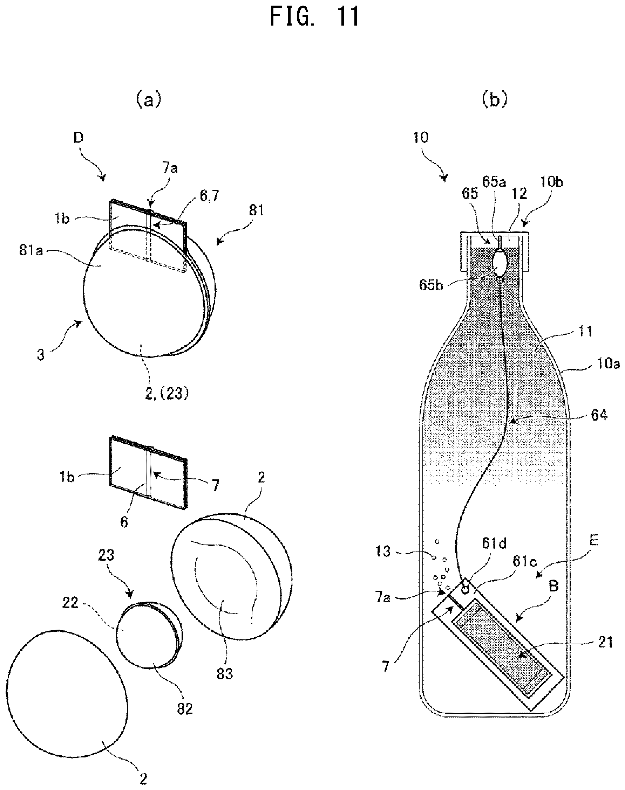

As shown in Fig. 11 (a), the hydrogen generation unit D for producing a hydrogen-containing liquid where the hydrogen generation unit D is immersed in drinking water 11 and hydrogen is made to be contained in the drinking water 11, wherein the hydrogen generation unit D according to the fourth embodiment is configured such that a hydrogen generating agent 2 which generates hydrogen by being impregnated with water, reaction water 22, and a non-flowout state maintaining unit which maintains the reaction water 22 in a non-flowout state where the reaction water 22 does not react with the hydrogen generating agent 2 are accommodated in an accommodating body 81 having a hydrogen discharge port 7 formed of a tubular narrowed passage 6, and the non-flowout state maintaining unit is configured to change the reaction water 22 in the non-flowout state into the flowout state where the reaction water 22 is reactable with the hydrogen generating agent 2 by applying a predetermined amount of energy to the accommodating body 81 from outside the accommodating body 81, whereby the reaction water 22 brought into the flowout state is made to react with the hydrogen generating agent 2 by being triggered by application of the energy and hydrogen generated in the accommodating body 81 is discharged through the hydrogen discharge port 7, and the hydrogen-containing liquid is produced without permeation of the drinking water 11 into the hydrogen generation unit D.

Further, the non-flowout state maintaining unit is a flexible partitioned chamber 23 which accommodates the reaction water 22 in a non-flowout state by hermetically accommodating the reaction water 22, and the partitioned chamber 23 includes an easy-to-break portion 82 which brings the reaction water 22 into a flowout state by discharging the reaction water 22 stored in the partitioned chamber 23 by being applied with a predetermined amount of an external force as the energy.

Further, the hydrogen generating agent 2, the reaction water 22 and the non-flowout state maintaining unit are accommodated in such a manner that the partitioned chamber 23 is accommodated in a center portion of the accommodating chamber 3 which defines an internal space of the accommodating body 81 formed of a spherical bag body 81a having an approximately spherical shape made of a film-like sheet material having flexibility and extremely high moisture-proof, the hydrogen generating agent 2 is accommodated in the accommodating chamber 3 at the outer periphery of the partitioned chamber 23, and the narrowed passage 6 which communicates with the outside from the accommodating chamber 3 is provided to an upper portion of the accommodating chamber 3.

To be more specific, the accommodating body 81 (spherical bag body 81a) is formed with an outer diameter which allows the accommodating body 81 to be put into a preparation container 10 from an opening portion of the preparation container 10, and is formed into an approximately spherical bag shape by forming two thin-film-like polypropylene-made sheet materials into an approximately semispherical shape and by hermetically sealing respective outer edge portions of the approximately semispherical sheet materials. Further, as shown in Fig. 1(a) for example, using the portion including the hydrogen discharge port 7 formed of the tubular narrowed passage 6 formed in the hydrogen generation unit A according to the first embodiment as it is, the portion and the end portion of the accommodating body 81 are integrally sealed such that one end portion of the narrowed passage 6 communicates with the accommodating chamber 3. A material for forming the spherical bag body 81a is not particularly limited provided that the material has heat resistance, and does not allow the drinking water 11 outside the spherical bag body 81 a to permeate into the spherical bag body 81 a and does not allow the reaction water 22 inside the spherical bag body 81 a to permeate to the outside of the spherical bag body 81a.

Accordingly, the hydrogen generation unit D is configured such that the accommodating chamber 3 and the outside are communicated with each other through an opening 7a of the hydrogen discharge port 7 disposed on the other end portion of the narrowed passage 6.

The partitioned chamber 23 is a portion which functions as a non-flowout state maintaining unit for maintaining the reaction water 22 in a non-flowout state where the reaction water 22 does not react with the hydrogen generating agent 2, and is formed into an approximately spherical bag shape smaller than the spherical bag body 81a using substantially the same method of forming the spherical bag body 81a.

A film-like sheet material for forming the partitioned chamber 23 is a thin film made of polyester, and the whole partitioned chamber 23 is formed as an easy-to-break portion 82. That is, the partitioned chamber 23 is configured to be broken at any portion thereof by being pushed by an external force. A material for forming the partitioned chamber 23 and transparency of the material are not particularly limited provided that the material does not allow the reaction water 22 inside the partitioned chamber 23 to permeate to the outside of the partitioned chamber 23, and can be easily broken. That is, the easy-to-break portion 24 is configured to be broken at any portion thereof by being pushed with a predetermined surface pressure without using other member such as a penetrating member having a sharpened distal end portion.

The hydrogen generating agent 2 is configured such that the hydrogen generating agent 2 is not accommodated in the hydrogen generating body, has an approximately semispherical shape, and a recessed portion 83 which can accommodate the partitioned chamber 23 therein is formed at the center portion of the hydrogen generating agent 2. The partitioned chamber 23 is accommodated in a space defined by two recessed portions 83 of the hydrogen generating agents 2 configured as described above, and the hydrogen generating agents 2 are covered by the accommodating body 81 having an approximately spherical shape.

It is preferable that the hydrogen generating agent 2 be fully filled in the accommodating chamber 3 such that a gap is not generated in the accommodating chamber 3 as much as possible. Further, the hydrogen generating agent 2 formed by molding may have a strength to an extent that the hydrogen generating agent 2 can be easily deformed by a force of fingertip.

According to the hydrogen generation unit D having the above-mentioned configuration, when the accommodating body 81 is pressed by fingers, a pressure is applied to the hydrogen generating agents 2 so that the hydrogen generating agents 2 are deformed and, then, the partitioned chamber 23 (easy-to-break portion 82) is broken due to an external force attributed to the deformation in shape of the hydrogen generating agents 2, and the reaction water 22 embraced in the partitioned chamber 23 is discharged thus bringing the reaction water 22 into a flowout state.

That is, using the external force by the fingers as energy, the reaction water 22 can be changed into the flowout state from the non-flowout state by being triggered by application of such energy, and the reaction water 22 which is brought into the flowout state is borough into contact with the hydrogen generating agent 2 surrounding the reaction water 22 so that the hydrogen generation reaction is started thus generating hydrogen.

The hydrogen generation unit D according to this embodiment is configured as described above. Accordingly, after the reaction water 22 is flown out due to breaking of the easy-to-break portion 82, as described in the first embodiment, by immersing the hydrogen generation unit D into the drinking water 11 accommodated in the preparation container 10 as shown in Fig. 4(a) and Fig. 4(b), hydrogen is made to be contained in the drinking water 11 thus preparing the hydrogen-containing liquid.

Further, the hydrogen generation unit D is configured to float in the drinking water 11 due to a hydrogen gas fully filled in the accommodating chamber 3.

In the same manner as the hydrogen generation unit A according to the first embodiment, the hydrogen generation unit D according to this embodiment is also configured to finish the hydrogen generation reaction in approximately 10 to 15 minutes after the reaction water 22 is flown out due to breaking of the easy-to-break portion 82. When a user wants to drink the hydrogen-containing liquid immediately after the preparation of the hydrogen-containing water, the user can produce a hydrogen-containing liquid of an approximately 5.0ppm by holding an approximately center portion of the preparation container and by quickly shaking and agitating the preparation container leftward and rightward by approximately 180° about his wrist for approximately 30 seconds.

Further, the hydrogen generation unit D is configured to produce a hydrogen-containing liquid of approximately 7.0ppm by leaving the hydrogen-containing liquid at rest in a refrigerator for approximately 24 hours after the hydrogen generation reaction is finished and by agitating the hydrogen-containing liquid as described above.

At the time of drinking the hydrogen-containing liquid, by opening a screw cap 10b, the hydrogen generation unit D appears in the vicinity of the opening portion of the preparation container 10 and hence, the user can drink the hydrogen-containing liquid by easily removing the hydrogen generation unit D.

As described above, the hydrogen generation unit D for producing a hydrogen-containing liquid where the hydrogen generation unit D is immersed in the drinking water 11 and hydrogen is made to be contained in the drinking water 11, wherein the hydrogen generation unit D according to this embodiment is configured such that the hydrogen generating agent 2 which generates hydrogen by being impregnated with water, the reaction water 22, and the non-flowout state maintaining unit which maintains the reaction water 22 in a non-flowout state where the reaction water 22 does not react with the hydrogen generating agent 2 are accommodated in the accommodating body 81 having the hydrogen discharge port 7 formed of the tubular narrowed passage 6, and the non-flowout state maintaining unit is configured to change the reaction water 22 in the non-flowout state into the flowout state where the reaction water 22 is reactable with the hydrogen generating agent 2 by applying a predetermined amount of energy to the accommodating body 81 from outside the accommodating body 81, whereby the reaction water 22 brought into the flowout state is made to react with the hydrogen generating agent 2 by being triggered by application of the energy and hydrogen generated in the accommodating body 81 is discharged through the hydrogen discharge port 7, and the hydrogen-containing liquid is produced without permeation of the drinking water 11 into the hydrogen generation unit D. Accordingly, it is possible to provide the hydrogen generation unit D which can produce a hydrogen-containing liquid more easily compared to the conventional hydrogen adding instrument.

Further, the non-flowout state maintaining unit is the flexible partitioned chamber 23 which accommodates the reaction water 22 in a non-flowout state by hermetically accommodating the reaction water 22, and the partitioned chamber 23 includes the easy-to-break portion 82 which brings the reaction water 22 into a flowout state by discharging the reaction water 22 stored in the partitioned chamber 23 by being applied with a predetermined amount of an external force as the energy and hence, the reaction water 22 can be brought into a flowout state by merely pushing the partitioned chamber 23 by way of the hydrogen generating agents 2 from the outside of the accommodating body 81 with finger tips or the like, for example, thus starting the hydrogen generation reaction extremely simply.

The hydrogen generating agent 2, the reaction water 22 and the non-flowout state maintaining unit are accommodated in such a manner that the partitioned chamber 23 is accommodated in the center portion of the accommodating chamber 3 which defines the internal space of the accommodating body 81 formed of the spherical bag body 81a having an approximately spherical shape made of a film-like sheet material having flexibility and extremely high moisture-proof, the hydrogen generating agents 2 are accommodated in the accommodating chamber 3 at the outer periphery of the partitioned chamber 23, and the narrowed passage 6 which communicates with the outside from the accommodating chamber 3 is provided to the upper portion of the accommodating chamber 3 and hence, the accommodating chamber 3 can be constituted of a single chamber so that the structure of the hydrogen generation unit D can be simplified thus manufacturing the hydrogen generation unit D easily and at a low cost.

Further, the hydrogen generating agents 2 and the partitioned chamber 23 are accommodated in the same accommodating chamber 3 and, further, the partitioned chamber 23 is surrounded by the hydrogen generating agents 2 and hence, the reaction water 22 flown out from the partitioned chamber 23 can be efficiently contributed to the hydrogen generation reaction.

Next, a hydrogen generation unit E according to a fifth embodiment is described. In this embodiment, parts in common with the hydrogen generation units A, A1 to A6, B, B7, B8, C and D according to the above-mentioned first to fourth embodiments and modifications are given the same symbols, and their description is omitted when appropriate.

### [Fifth embodiment]

As shown in Fig. 11(b), a hydrogen generation unit E according to a fifth embodiment is formed such that a weight not shown in the drawing is accommodated in an accommodating chamber 3 of the hydrogen generation unit B according to the second embodiment, one end portion of a cord body 64 having a predetermined length is connected to a bonding portion 61 c, and a floating body 65 is connected to the other end portion.

To be more specific, a weight which sinks in drinking water 11 even in a state where the hydrogen generation unit E body (B) generates a hydrogen gas is accommodated in the accommodating chamber 3. A cord body insertion binding hole 61d is formed in the bonding portion 61c in the vicinity of an opening 7a of a hydrogen discharge port 7, and one end portion of the cord body 64 having a predetermined length is bound to the hole 61d. A floating body 65 having approximately same shape as a floating member for fishing is bound to the other end portion of the cord body 64.

In this embodiment, the weight is accommodated in the hydrogen generation unit B according to the second embodiment, and the weight is connected with the floating body 65 using the cord body 64. However, the same configuration may be applicable to the hydrogen generation units according to the above-mentioned other embodiments and modifications.

It is desirable that the weight and the floating body 65 be formed of a material made of a synthetic resin which hardly reacts with the reaction water 22 or the drinking water 11, for example, a member made of polyethylene. It is also desirable that the cord body 64 be formed of a material which avoids dissolution of the component of the cord body 64 into the drinking water 11, for example, a cord made of nylon.

The floating body 65 has a rod-like holding portion 65a on an upper portion thereof and a hollow portion 65b having an egg-like shape and being hollow on an lower portion thereof

The cord body 64 has a length such that the holding portion 65a of the floating body 65 can project from an opening portion of the preparation container 10 even when the hydrogen generation unit E sinks at a bottom portion of the preparation container 10.

The hydrogen generation unit E according to this embodiment is formed as described heretofore.

In this manner, the hydrogen generation unit E according to this embodiment can discharge bubbles 13 which contain hydrogen abundantly in a state where the hydrogen generation unit E body (B) is sunk in the drinking water 11 in the preparation container 10. Accordingly, initial dissolving property of the hydrogen into the drinking water 11 can be enhanced.

Further, when the drinking water 11 is drunk, by opening the screw cap 10b, the holding portion 65a of the floating body 65 is emerged in the vicinity of the opening portion of the preparation container 10. Accordingly, the hydrogen generation unit E can be extremely easily pulled out and hence, the drinking water 11 can be drunk.

As has been described above, the hydrogen generation unit according to this embodiment can provide a hydrogen generation unit for producing a hydrogen-containing liquid where the hydrogen generation unit is immersed in a liquid and hydrogen is made to be contained in the liquid, wherein the hydrogen generation unit is configured such that a hydrogen generating agent which generates hydrogen by being impregnated with water, the water, and a non-flowout state maintaining unit which maintains the water in a non-flowout state where the water does not react with the hydrogen generating agent are accommodated in an accommodating body having a discharge unit for discharging a hydrogen gas, and the non-flowout state maintaining unit is configured to change the water in the non-flowout state into a flowout state where the water is reactable with the hydrogen generating agent by applying a predetermined amount of energy to the accommodating body from the outside of the accommodating body, whereby the water brought into the flowout state is made to react with the hydrogen generating agent by being triggered by application of the energy and hydrogen generated in the accommodating body is discharged through the discharge unit, and the hydrogen-containing liquid is produced without using infiltration of the liquid into the hydrogen generation unit. Accordingly, compared to conventional hydrogen adding instrument, it is possible to provide the hydrogen generation unit which can produce a hydrogen containing liquid more conveniently.

The description of the above-described respective embodiments is one example of the present invention, and the present invention is not limited to the above-described embodiments. Accordingly, besides the above-described respective embodiments, it is needless to say that various modifications can be made according to a design or the like within a scope of technical concept of the present invention.

Next, the hydrogen generation unit according to this embodiment which includes a water-repellant hydrogen permeable membrane is described with reference to drawings.

In the hydrogen generation unit according to this embodiment, the water-repellant hydrogen permeable membrane is used as the discharge unit. When the hydrogen generated in the inside of the accommodating body and having a high temperature passes through the water-repellant hydrogen permeable membrane which is cooled by the liquid outside the accommodating body, heat exchange is carried out and hence, the hydrogen is discharged as bubbles in a sufficiently cooled state.

Accordingly, compared to a case where the discharge unit is realized by the valve mechanism, dissolution of the hydrogen into the liquid as the bubbles ascend can be promoted and hence, it is possible to easily acquire the hydrogen-containing liquid in which a highly concentrated hydrogen is dissolved. Particularly, trouble of stirring after generation of the hydrogen can be reduced.

Further, by using a fine porous film raw material having a large number of extremely minute apertures as the water-repellant hydrogen permeable membrane, the bubbles formed by the hydrogen which is moved to the liquid side via the membrane are extremely fine and hence, with such a configuration also, it can be expected that a highly concentrated hydrogen be dissolved in the liquid.

In addition, compared to a mechanical check valve structure, since the water-repellant hydrogen permeable membrane allows, for example, a minute water molecule in a vapor state or a molecule in a gas form such as hydrogen to pass therethrough selectively depending on a size and a property of a hole through which the raw material passes, a large number of extremely minute hydrogen gas particles pass through the membrane. Accordingly, the hydrogen can be far more easily dissolved in the drinking water. It can be expected that a highly concentrated hydrogen gas be dissolved in the drinking water without stirring. Here, usefulness of the water-repellant hydrogen permeable membrane as the discharge unit compared to the valve mechanism is described. However, the above-mentioned description does not inhibit the adoption of the valve mechanism as the discharge unit. Accordingly, it should be interpreted that this specification also includes the adoption of the valve mechanism as the discharge unit.

In this manner, according to the hydrogen generation unit of this embodiment, a hydrogen-containing liquid can be produced more conveniently compared to a conventional hydrogen adding instrument. Further, since the hydrogen-containing liquid is produced without using infiltration of the liquid into the hydrogen generation unit, a possibility that the component of the hydrogen generating agent leaks into the liquid along with the circulation of the liquid inside and outside of the hydrogen generation unit can be suppressed as much as possible.

### [Sixth embodiment]

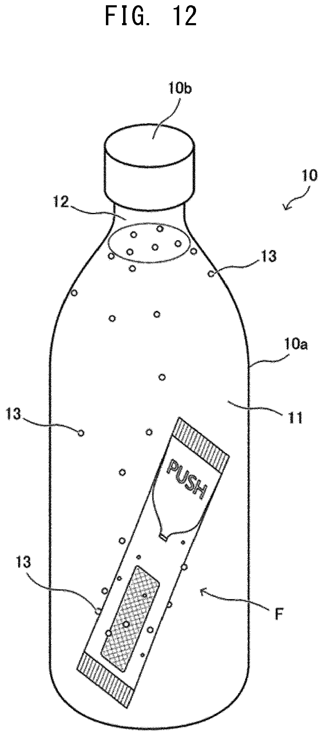

Fig. 12 is an explanatory view showing a state where a hydrogen-containing liquid is produced using a hydrogen generation unit F according to a sixth embodiment. As shown in Fig. 12, by immersing the hydrogen generation unit F into drinking water 11 as a designated liquid which is accommodated in a preparation container 10, a hydrogen-containing liquid in which hydrogen is made to be contained in the drinking water 11 is prepared.

The preparation container 10 is a PET bottle container with a 500ml capacity having such pressure resistance as of a container used for selling carbonated water or the like on the market and includes a hollow container body 10a and a screw cap 10b which is threadedly engaged with an upper opening of the container body 10a and hermetically seals the container body 10a. In this embodiment, a PET bottle (container made of polyethylene terephthalate) is used as a container. However, the container is not limited to a PET bottle, and the container may be made of glass or aluminum raw material.

In the preparation container 10, a liquid phase portion is formed by accommodating the drinking water 11 therein to the vicinity of the bottle neck portion (48/50 to 249/250 of internal volume of the preparation container 10) while a gas phase portion is formed above the liquid phase portion as an air collection portion 12.

Fig. 12 shows a state where the hydrogen generation unit F has already started the hydrogen generation reaction, and bubbles 13 containing hydrogen abundantly ascend toward the air collection portion 12 from the surface of the hydrogen generation unit. That is, while the bubbles 13 ascend in the drinking water 11, the hydrogen is dissolved in the drinking water 11 whereby the hydrogen-containing liquid is prepared.

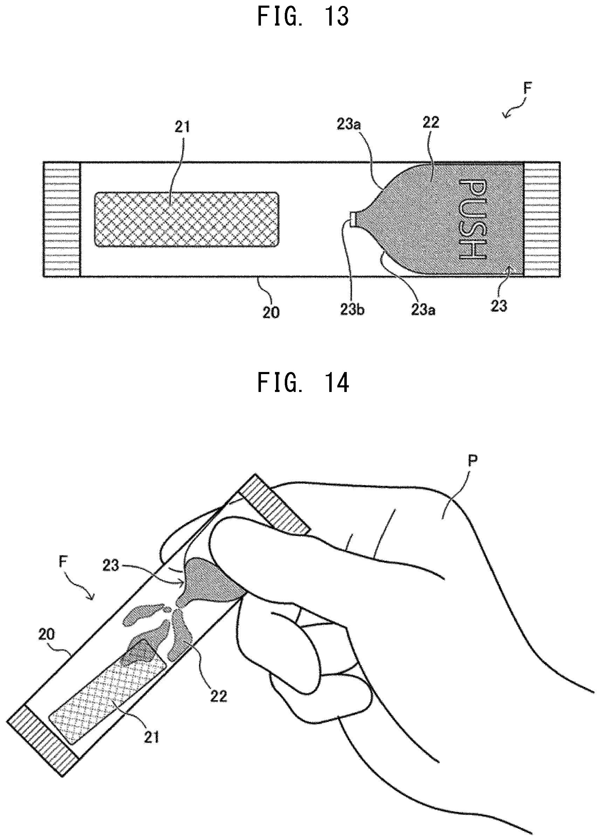

Fig. 13 is an explanatory view showing the configuration of the hydrogen generation unit F. As shown in Fig. 13, the hydrogen generation unit F is configured such that a hydrogen generating body 21, reaction water 22, and a partitioned chamber 23 are accommodated in an accommodating body 20.

The accommodating body 20 is formed into a bag-like shape by sealing both ends of a reverse osmosis membrane (RO membrane) having a tube-like shape, and approximately the whole of the accommodating body 20 functions as a water-repellant hydrogen permeable membrane.

The hydrogen generating body 21 is a portion where hydrogen generation reaction is performed by being brought into contact with the reaction water 22 in a flowout state, and a hydrogen generating agent is accommodated in the hydrogen generating body 21. In this embodiment, the hydrogen generating agent is mixed powder which contains aluminum and calcium hydrate as main components.

The reaction water 22 is water for generating the hydrogen generation reaction by being brought into contact with the hydrogen generating body 21 (the hydrogen generating agent in the hydrogen generating body 21). In this embodiment, pure water is used as the reaction water 22. Further, in Fig. 13, the reaction water 22 is accommodated in a partitioned chamber 23 and is maintained in a non-flowout state.

The partitioned chamber 23 is a portion which functions as a non-flowout state maintaining unit for maintaining the reaction water 22 in a non-flowout state where the reaction water 22 does not react with the hydrogen generating agent in the hydrogen generating body 21 and is formed by partitioning an internal space of the accommodating body 20 with a partition seal portion 23a in a watertight manner.

Further, an easy-to-break portion 23b which has weaker seal strength while maintaining water tightness is formed on a portion of the partition seal portion 23a.

As shown in Fig. 14, this easy-to-break portion 23b has seal strength with which the inside and the outside of the partitioned chamber 23 can be communicated in the accommodating body 20 by pressure which is applied when a user P presses a partitioned chamber 23 portion of the accommodating body 20 with a finger or the like. With the application of an external force as described above, the reaction water 22 can be discharged via the easy-to-break portion 23b and can be brought into a flowout state.

As shown in Fig. 12, by immersing the hydrogen generation unit F where the hydrogen generation reaction is started in this manner into the drinking water 11 which is accommodated in the preparation container 10, the hydrogen-containing liquid can be easily and conveniently produced.

Particularly, in the hydrogen adding instrument shown in the previously-described patent literature 1, to generate the hydrogen generation reaction, it is necessary to add water for which the trouble to measure a designated amount is taken to the hydrogen generating agent. However, the hydrogen generation unit F according to the present invention does not require such a measuring operation, and the hydrogen generation reaction can be conveniently started.

Further, since a surface of the accommodating body 20 is formed of a semipermeable membrane (water-repellant hydrogen permeable membrane), it is possible to reliably prevent the drinking water 11 from infiltrating into the accommodating body 20 and prevent a reaction product or the like of the hydrogen generating agent from flowing out to the outside of the accommodating body 20.

Still further, the generated hydrogen is cooled via the semipermeable membrane and is diffused in the drinking water 11 in a form of fine bubbles and hence, also in view of the dependence of the dissolving degree of hydrogen into the liquid on temperature, a highly concentrated hydrogen-containing liquid can be prepared with high efficiency.

Next, a preparation test of the hydrogen-containing liquid which is actually carried out using the hydrogen generation unit F is described.

First of all, a reverse osmosis membrane (RO membrane) used for generating RO (Reverse Osmosis) water was processed into a cylindrical shape and accommodated the previously-described hydrogen generating body and, at the same time, accommodated a small vinyl bag in which reaction water was accommodated, and both end opening portions of the reverse osmosis membrane are hermetically sealed. The small vinyl bag functions as the partitioned chamber 23 and has portions corresponding to the separation seal portion 23a and the easy-to-break portion 23b. Sealing of the both end opening portions may be performed by thermal adhesion, or the both end opening portions may be sealed using urethane, an adhesive agent having insolubility in water or the like.

The hydrogen generation unit F formed in this manner was pressed with a fingertip thus squashing the partitioned chamber 23 whereby the water was let out, and the hydrogen generation unit F was put into a PET bottle with a 500ml capacity in which pure water was filled, and a lid was closed after the hydrogen generation unit F sank in the pure water.

After approximately 5 to 10 minutes, bubbles were generated from a surface of the hydrogen generation unit F, and the bubbles gradually ascended toward an upper portion of the PET bottle. When the PET bottle was grasped, the PET bottle felt hard and hence, it was confirmed that an internal pressure of the PET bottle was increased.

After 12 hours elapsed, the lid of the PET bottle was opened. Then, measurement of dissolved hydrogen gas concentration was performed a plurality of times using a methylene blue reagent, and values of 6.9 to 7.4ppm, 7.1ppm on average, were obtained. Accordingly, it was demonstrated that the hydrogen generation unit F according to this embodiment can more conveniently produce the hydrogen-containing liquid compared to the conventional hydrogen adding instrument.

Further, the hydrogen-containing liquid was subjected to a mass spectrometric analysis device so as to confirm presence of dissolved impurity. However, dissolution of aluminum or calcium into the hydrogen-containing liquid was not detected. Further, dissolution of a cation or an anion derived from the hydrogen generation unit F was not also detected, and the concentration of hydrogen ion also remained neutral.

In this manner, according to the hydrogen generation unit J of this embodiment, when a hydrogen gas is generated by adding reaction water to the hydrogen generating body whose main component is metal, by using a semipermeable membrane through which a metallic element or the like other than a hydrogen gas or water cannot permeate into a liquid such as drinking water (a so-called biological adaptation solution or the like), the hydrogen-containing liquid containing a highly concentrated hydrogen gas can be produced far more safely and easily than the conventional method. Particularly, hydrogen which is a medical gas essential to maintain human health from now on is utilized more widely and hence, it can be said that utility value in medical treatment and in industry is immeasurable.

Further, although mention of test results is omitted, hydrogen generation reaction can be also generated without requiring even pressing operation of a partitioned chamber in such a manner that, by putting a hydrogen generation unit F using a semipermeable membrane into a container filled with a liquid and sealed, the liquid is made to impregnate into the hydrogen generation unit F via the semipermeable membrane.

It can be said that the above-described sixth embodiment specifically describes hydrogen generation units or methods as follows.
(1-1) A hydrogen generation unit which is formed of a semipermeable membrane and accommodates a hydrogen generating body.
(1-2) A hydrogen generation unit which uses a semipermeable membrane as a raw material for accommodating a hydrogen generating body.
(1-3) A hydrogen generation unit which is formed of semipermeable membrane and accommodates a hydrogen generating body, wherein water or a hydrogen gas is made to pass through only the semipermeable membrane without using mechanical mechanism such as a valve.
(1-4) A hydrogen generation unit which accommodates a hydrogen generating body and uses a reverse osmosis membrane (RO membrane) for producing RO (Reverse Osmosis) water as a raw material of semipermeable membrane used for making generated hydrogen gas to permeate therethrough to the outside of the hydrogen generation unit from the inside of the hydrogen generation unit.
(1-5) A method where a hydrogen gas is generated in a hydrogen generation unit which is formed of a semipermeable membrane and accommodates a hydrogen generating body, this hydrogen generation unit is put into a container filled with a liquid, and pressure in the container is increased by a generated hydrogen gas whereby the hydrogen gas is easily made to be contained in a liquid and in high concentration.
(1-6) A hydrogen generation unit which accommodates a hydrogen generating body and uses a semipermeable membrane as a raw material used for making the generated hydrogen gas to permeate therethrough to the outside of the hydrogen generation unit from the inside of the hydrogen generation unit.
(1-7) A method where a hydrogen generation unit accommodates a hydrogen generating body therein, and allows reaction water used for generating a hydrogen gas to be impregnated into the inside of a hydrogen generation unit which is accommodated in a container from the liquid in the container which is filled with the liquid via a semipermeable membrane which forms a portion or the whole of an accommodating body of the hydrogen generation unit, and the liquid is brought into contact with the hydrogen generating body and is made to react with the hydrogen generating body thus generating the hydrogen gas.
(1-8) A hydrogen generation unit which accommodates a hydrogen generating body, and includes a semipermeable membrane as a raw material used for making a generated hydrogen gas to permeate through the hydrogen generating body to the outside of the hydrogen generation unit from the inside of the hydrogen generation unit, wherein the hydrogen generation unit is characterized in that the semipermeable membrane allows a water molecule as a liquid or a hydrogen molecule as a molecule in a gas form to permeate therethrough and does not allow a metal ion, an inorganic compound and an organic substance dissolved in the liquid other than the water molecule to permeate therethrough.
(1-9) A hydrogen generation unit provided with a partitioned chamber where reaction water maintained in a non-flowout state can be diffused in a flowout state by letting out the water by action of external force.
(1-10) A method where a partitioned chamber in which reaction water maintained in a non-flowout state can be diffused in a flowout state by letting out the water by action of external force is enveloped in an accommodating body or an attached apparatus through which water can flow, reaction water in the partitioned chamber is let out before the accommodating body is put into a container which is filled with a liquid and is sealed, a hydrogen gas is generated in the accommodating body, the hydrogen gas is diffused in the liquid via a semipermeable membrane whereby the hydrogen gas is safely contained in the liquid.
(1-11) A method where, as a component for forming a hydrogen generating agent accommodated in a hydrogen generating body, metal aluminum, calcium oxide, calcium hydroxide or the like which is a food additive or any of magnesium, zinc, iron, cobalt, nickel, lithium, sodium, potassium, strontium, barium, phosphorus, saccharide, an aromatic hydrocarbon and an alcohol is made to be contained, and water is made to react with the component thus dissolving a hydrogen gas into a liquid.

On the contrary to this embodiment, a hydrogen generating agent may be isolated using an easy-to-break raw material, and by applying energy from the outside, the hydrogen generating agent may be made to react with water which is positioned outside the raw material or at a separate position.

### [Seventh embodiment]

Next, a hydrogen generation unit J according to a seventh embodiment is described. In this embodiment, the hydrogen generation unit J is not particularly shown in the drawing. However, although this hydrogen generation unit J has approximately similar configuration to the hydrogen generation unit F, an accommodating body 20 may be formed of a waterproof moisture permeable material, to be more specific, a membrane through which water transferred from a drinking water 11 side and having sufficient amount to react with a hydrogen generating agent 2 can permeate such as, for example, a stretched PTFE used for Gore-Tex (registered trademark). Further, the hydrogen generation unit J differs from the hydrogen generation unit F in the configuration where the partitioned chamber 23 and the reaction water 22 maintained in the partitioned chamber 23 are not provided in the hydrogen generation unit J. The water permeated into the accommodating body 20 reacts with the hydrogen generating agent 2 and hence, the water does not permeate through the accommodating body 20 and does not flow out to the outside of the accommodating body 20. Further, when the hydrogen generating agent 2 is made to be contained in an unwoven fabric or the like through which moisture can permeate and into which moisture can impregnate, the water permeated into the accommodating body 20 is maintained in the unwoven fabric or the like and hence, it is possible to make the reaction water 22 reacted with the hydrogen generating agent 2 hardly permeate and flow out through the accommodating body 20 to the outside of the accommodating body 20.

With respect to the hydrogen generation unit J formed in this manner also, as shown in Fig. 12, by immersing the hydrogen generation unit J into drinking water 11 which is accommodated in a preparation container 10, the water in the drinking water 11 can impregnate into the hydrogen generation unit J via the accommodating body 20 whereby a hydrogen generation reaction is brought about. Accordingly, a hydrogen-containing liquid can be easily and conveniently produced.

Next, a preparation test of the hydrogen-containing liquid which is actually carried out using the hydrogen generation unit J is described.

First of all, a stretched PTFE membrane was processed into a cylindrical shape and accommodated the previously-described hydrogen generating body, and both end opening portions of the stretched PTFE membrane are hermetically sealed. Sealing of the both end opening portions may be performed by thermal adhesion, or the both end opening portions may be sealed using urethane, an adhesive agent having insolubility in water or the like.

The hydrogen generation unit J formed in this manner was put into a PET bottle with a 500ml capacity in which pure water was filled, and a lid was closed after the hydrogen generation unit J sank in the pure water.

After approximately 2 to 3 hours, bubbles were generated from a surface of the hydrogen generation unit J, and the bubbles gradually ascended toward an upper portion of the PET bottle. When the PET bottle was grasped, the PET bottle became hard and hence, it was confirmed that an internal pressure of the PET bottle was increased.

After 12 hours elapsed, the lid of the PET bottle was opened. Then, measurement of dissolved hydrogen gas concentration was performed a plurality of times using a methylene blue reagent, and values of 6.9 to 7.4ppm, 7.1ppm on average, were obtained. Accordingly, it was demonstrated that the hydrogen generation unit J according to this embodiment can more conveniently produce the hydrogen-containing liquid compared to the conventional hydrogen adding instrument.

Further, the hydrogen-containing liquid was subjected to a mass spectrometric analysis device so as to confirm presence of dissolved impurity. However, dissolution of aluminum or calcium into the hydrogen-containing liquid was not detected. Further, dissolution of a cation or an anion derived from the hydrogen generation unit J was not also detected, and the concentration of hydrogen ion also remained neutral.

In this manner, according to the hydrogen generation unit J of this embodiment, when a hydrogen gas is generated by adding reaction water to the hydrogen generating body whose main component is metal, by using a water-repellant air-permeable material through which a metallic element or the like other than a hydrogen gas or water cannot permeate into a liquid such as drinking water (a so-called biological adaptation solution or the like), the hydrogen-containing liquid containing a highly concentrated hydrogen gas can be produced far more safely and easily than the conventional method. Particularly, hydrogen which is a medical gas essential to maintain human health from now on is utilized more widely and hence, it can be said that utility value in medical treatment and in industry is immeasurable.

In this embodiment, an example where the hydrogen generation unit does not include the partitioned chamber 23 and the reaction water 22 is described. However, it is needless to say that the hydrogen generation unit may include the partitioned chamber 23 and the reaction water 22.

It can be said that the above-described second embodiment specifically describes hydrogen generation units or methods as follows.
(2-1) A hydrogen generation unit which is formed such that a hydrogen generating body is accommodated in an accommodating body formed of a waterproof moisture permeable material or a water-repellant air-permeable material.
(2-2) A hydrogen generation unit which uses Gore-Tex (registered trademark) material as a waterproof moisture permeable material for accommodating a hydrogen generating body and making generated hydrogen gas to permeate therethrough to the outside of the hydrogen generation unit from the inside of the hydrogen generation unit.
(2-3) A hydrogen generation unit where, when the hydrogen generation unit uses a waterproof moisture permeable material for accommodating a hydrogen generating body and for making generated hydrogen gas to permeate therethrough to the outside of the hydrogen generation unit from the inside of the hydrogen generation unit, the waterproof moisture permeable material is formed into a bag shape so that the permeability of water vapor has directional property toward the inside of the hydrogen generation unit from the outside of the hydrogen generation unit.
(2-4) A hydrogen generation unit where, when the hydrogen generation unit uses a waterproof moisture permeable material for accommodating a hydrogen generating body and for making generated hydrogen gas to permeate therethrough to the outside of the hydrogen generation unit from the inside of the hydrogen generation unit, the waterproof moisture permeable material is formed into a bag shape so that the permeability of water vapor has directional property toward the outside of the hydrogen generation unit from the inside of the hydrogen generation unit.
(2-5) A method where a hydrogen gas is generated in a state where a hydrogen generation unit which is formed of a waterproof moisture permeable material or a water-repellant air-permeable material and accommodates a hydrogen generating body is put into a container filled with a liquid, and pressure in the container is increased by the hydrogen gas which is diffused in the liquid through the waterproof moisture permeable material or the water-repellant air-permeable material whereby a hydrogen gas is made to be contained in the liquid easily and in high concentration.
(2-6) A method where reaction water for accommodating a hydrogen generating body and for generating a hydrogen gas is impregnated into the inside of a hydrogen generation unit in a state of water vapor which is put into a container from the liquid filled in the container via a waterproof moisture permeable material which forms at least one portion of the hydrogen generation unit, and the reaction water is brought into contact with the hydrogen generating body and is made to react with the hydrogen generating body thus generating the hydrogen gas.
(2-7) A hydrogen generation unit which includes a waterproof moisture permeable material as a raw material used for accommodating a hydrogen generating body and making the generated hydrogen gas to permeate therethrough to the outside of the hydrogen generation unit from the inside of the hydrogen generation unit, wherein the hydrogen generation unit is characterized in that the waterproof moisture permeable material allows a hydrogen molecule as a molecule and water vapor in a gas form to permeate therethrough and does not allow a metal ion, an inorganic compound and an organic substance dissolved in the liquid to permeate therethrough.
(2-8) A method where a partitioned chamber with which reaction water maintained in a non-flowout state can be diffused in a flowout state by letting out the water due to an action of external force is enveloped in an accommodating body or an attached instrument through which water can flow, reaction water in the partitioned chamber is let out thus generating a hydrogen gas in the accommodating body before the accommodating body is put into a container which is filled with a liquid and is sealed, the hydrogen gas is diffused in the liquid via a waterproof moisture permeable material whereby the hydrogen gas is safely contained in the liquid.
(2-9) A method where a hydrogen generation unit in which a portion or the whole of an accommodating body for accommodating a hydrogen generating agent is formed of a waterproof moisture permeable material or a water-repellant air-permeable material such as Gore-Tex, for example, is put into a container filled with a liquid and sealed, pressure in the container filled with the liquid and sealed is increased by hydrogen generated in the hydrogen generation unit, and a hydrogen gas is dissolved in the liquid in high concentration, wherein the pressure in the container filled with a liquid and sealed is made to match with osmotic pressure generated in the waterproof moisture permeable material or the water-repellant air-permeable material thus minimizing pressure difference between the inside and the outside of the waterproof moisture permeable material or the water-repellant air-permeable material whereby the circulation of the hydrogen gas or water vapor permeated through the waterproof moisture permeable material or the water-repellant air-permeable material is made possible safely.
(2-10) A method where, as a component for forming a hydrogen generating agent accommodated in a hydrogen generating body, metal aluminum, calcium oxide, calcium hydroxide or the like which is a food additive or any of magnesium, zinc, iron, cobalt, nickel, lithium, sodium, potassium, strontium, barium, phosphorus, saccharide, an aromatic hydrocarbon and an alcohol is made to be contained, and water is made to react with the component thus dissolving a hydrogen gas into a liquid.

### [Eighth embodiment]

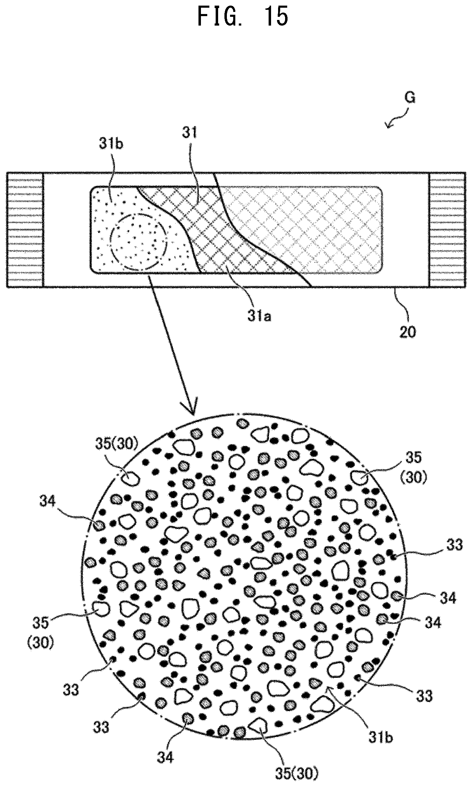

Next, a hydrogen generation unit G according to an eighth embodiment is described with reference to Fig. 15. Fig. 15 is an explanatory view showing the hydrogen generation unit G according to this embodiment with a portion cut away. In the description made hereinafter, there may be a case where constitutional elements of the hydrogen generation unit G substantially equal to the corresponding constitutional elements of the above-mentioned hydrogen generation unit F are given the same symbols, and their description is omitted.

As shown in Fig. 15, the hydrogen generation unit G has substantially the same configuration as the hydrogen generation unit F. However, the hydrogen generation unit G differs from the hydrogen generation unit F with respect to a point that a reaction water 30 is frozen, and the frozen reaction water 30 per se functions as a non-flowout state maintaining unit.

To be more specific, the hydrogen generation unit G is formed such that a hydrogen generating body 31 is accommodated in an accommodating body 20.

The hydrogen generating body 31 is formed such that a powdery hydrogen generating agent 31b is filled in a hydrogen generating agent accommodation bag 31a formed so as to allow at least hydrogen to permeate therethrough.

The hydrogen generating agent accommodation bag 31 a is a member which plays a role of preventing the hydrogen generating agent 31b from scattering in the accommodating body 20, and the hydrogen generating agent accommodation bag 31a is made of a nonwoven fabric in this embodiment.

As shown in a partial enlarged view in Fig. 15, the hydrogen generating agent 31b contains an aluminum powder 33 and a calcium hydroxide powder 34, and the hydrogen generating agent 31b can cause a hydrogen generation reaction with the supply of water in a liquid form.

The hydrogen generation unit G according to this embodiment is characterized in that the hydrogen generating agent 31b further contains ice particles 35 formed by making a reaction water 30 frozen in a mixed manner.

Accordingly, when the hydrogen generation unit G (hydrogen generating agent 31b) is disposed in an environment where a temperature is below a freezing point of the reaction water 30, for example, when the hydrogen generation unit G is disposed in a freezer or the like, the reaction water 30 is maintained in a non-flowout state so that a hydrogen generation reaction is not caused.

When the hydrogen generation unit G is taken out from the freezer and heat as an energy is applied to the ice particles 35 in such a manner that the hydrogen generation unit G is exposed to a room temperature atmosphere, is warmed up with hands or is immersed into a drinking water 11, the ice particles 35 are melt and a state of the reaction water 30 is changed to a flowout state and hence, the reaction water 30 reacts with the aluminum powder 33 and the calcium hydroxide powder 34 thus generating hydrogen.

Also with the use of the hydrogen generation unit G having such a configuration, it is possible to produce a hydrogen-containing liquid more conveniently compared to a conventional hydrogen adding instrument.

Next, a preparation test of a hydrogen-containing liquid which is actually carried out using the hydrogen generation unit G is described.

First of all, a waterproof moisture permeable material membrane such as Gore-Tex or a stretched PTFE membrane was processed into a cylindrical shape and accommodated the previously-described hydrogen generating body 31 (where ice formed by making water of an amount sufficient for a hydrogen gas generation reaction frozen is mixed), and both end opening portions of the waterproof moisture permeable material membrane are hermetically sealed in a condition where a temperature is set to a freezing temperature. Sealing of the both end opening portions may be performed by thermal adhesion, or the both end opening portions may be sealed using urethane, an adhesive agent having insolubility in water or the like.

The hydrogen generation unit G formed in this manner was taken out from a freezer, for example, and put into a PET bottle of 500ml volume in which pure water was filled, and a lid was closed after the hydrogen generation unit G sank in the pure water.

After approximately 10 to 20 minutes elapsed, bubbles were generated from a surface of the hydrogen generation unit G, and the bubbles gradually ascended toward an upper portion of the PET bottle. When the PET bottle was grasped, the PET bottle became hard and hence, it was confirmed that an internal pressure of the PET bottle was increased.

After the lapse of 12 hours, the lid of the PET bottle was opened. Then, measurement of dissolved hydrogen gas concentration was performed a plurality of times using a methylene blue reagent, and values of 6.8 to 7.4ppm, 7.2ppm on average, were obtained. Accordingly, it was demonstrated that the hydrogen generation unit G according to this embodiment can more conveniently produce the hydrogen-containing liquid compared to the conventional hydrogen adding instrument.

Further, the hydrogen-containing liquid was subjected to a mass spectrometric analysis device so as to confirm presence of dissolved impurity. However, dissolution of aluminum or calcium into the hydrogen-containing liquid was not detected. Further, dissolution of a cation or an anion derived from the hydrogen generation unit G was not also detected, and the concentration of hydrogen ion also remained neutral.

In this manner, according to the hydrogen generation unit G of this embodiment, moisture of an amount required for a hydrogen generation reaction was mixed into a hydrogen generating agent in a frozen state, the hydrogen generation unit G was put into a container which is filled with a liquid when used at a thawing temperature and the container was sealed, and a hydrogen gas was generated from the hydrogen generation unit put into the container when used by making moisture (reaction water) which is thawed and is brought into a flowout state and the hydrogen generating agent react with each other. Accordingly, a hydrogen gas is dispersed in a liquid through a semipermeable membrane, a waterproof moisture permeable material membrane or a water-repellent permeable material membrane and hence, a hydrogen gas can be contained in the liquid safely and easily. That is, the hydrogen-containing liquid containing a highly concentrated hydrogen gas can be prepared far more safely and easily than the conventional method and hence, hydrogen which is a medical gas essential to maintain human health from now on is utilized more widely whereby it can be said that utility value in medical treatment and in industry is immeasurable.

In this embodiment, the hydrogen generating agent 31b is prepared by mixing the ice particles 35 together with the aluminum powder 33 and the calcium hydroxide powder 34. However, a method for preparing the hydrogen generating agent 31b is not limited to the above-mentioned method. For example, the hydrogen generating body 21 which does not contain the above-mentioned ice particles 35 and a block of ice formed by making water of an amount required for a hydrogen generation reaction frozen may be accommodated in the accommodating body 20 as separate bodies. Also with such a configuration, the block of ice is melt and a reaction water is brought into a flowout state and hence, a hydrogen generation reaction can be caused.

It can be said that the above-described third embodiment specifically describes hydrogen generation units or methods as follows.
(3-1) A hydrogen generation unit where, in a hydrogen generating agent which generates a hydrogen gas due to a reaction with water, a frozen water is made to be contained at a freezing temperature.
(3-2) A hydrogen generation unit where, in a hydrogen generating agent which contains metal or the like which generates hydrogen due to a reaction with water, moisture of an amount sufficient for generating hydrogen is mixed at a freezing temperature, that is, in a frozen state.
(3-3) A hydrogen generation unit where, in a hydrogen generating agent which contains metal or the like which generates hydrogen due to a reaction with water, a material having water absorbing property which absorbs moisture of an amount sufficient for generating hydrogen, gradually leaks water and is made of nonwoven fabric or the like is mixed in a frozen state.
(3-4) A method where frozen water an amount of which is sufficient to generate hydrogen is mixed in a hydrogen generating agent which contains metal or the like capable of generating hydrogen due to a reaction with water and, subsequently, at the time of using the hydrogen generating agent, the frozen water is thawed at a thawing temperature, the hydrogen generating agent is put into a container filled with a liquid and the container is sealed by a lid, and reaction water in the hydrogen generating agent which is produced by bringing frozen water into a flowout state by thawing is made to react with a component such as metal capable of generating hydrogen due to a reaction with water.
(3-5) A method where frozen water an amount of which is sufficient to generate hydrogen is mixed in a hydrogen generating agent which contains metal or the like capable of generating hydrogen due to a reaction with water and, subsequently in a state where the hydrogen generating agent and the froze water is hermetically sealed by a raw material (partitioned chamber) such as a vinyl raw material which can be easily broken, before the hydrogen generating agent is used, the frozen water is thawed at a thawing temperature, the hydrogen generating agent is put into a container filled with a liquid and the container is sealed by a lid, and reaction water in the hydrogen generating agent which is produced by bringing frozen water into a flowout state by thawing is made to react with a component such as metal capable of generating hydrogen due to a reaction with water.

In this embodiment, the non-flowout state maintaining unit is realized by freezing water. However, as described previously, a non-flowout state maintaining unit may be realized using a gelling agent which can change a state with the application of an energy between a state where liquidity is extremely low or a solid state where a hydrogen generation reaction is not caused in a hydrogen generating agent (non-flowout state) and a state where liquidity is high and a hydrogen generation reaction is caused in the hydrogen generating agent (flowout state).

### [Ninth embodiment]

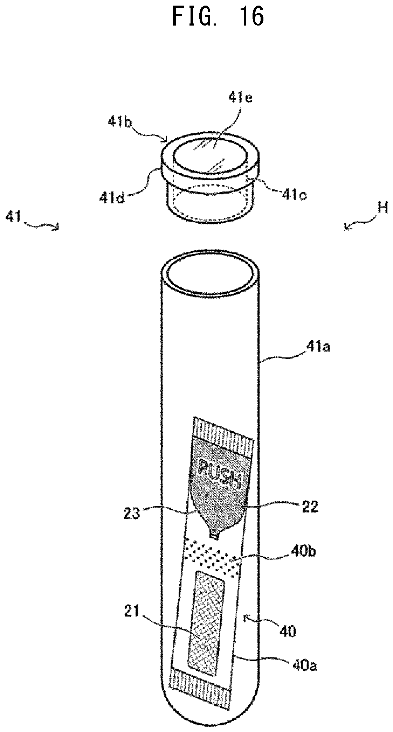

Next, a hydrogen generation unit H according to a ninth embodiment is described with reference to Fig. 16. Fig. 16 is an explanatory view showing the configuration of the hydrogen generation unit H according to this embodiment.

The hydrogen generation unit H is formed such that a hydrogen generation structural body 40 having a small bag shape which includes a partitioned chamber 23 as a non-flowout state maintaining unit which accommodates a reaction water 22 and a hydrogen generating body 21 is accommodated in an accommodating body 41 which is made of a resin and has approximately a Spitz tube shape.

The hydrogen generation structural body 40 has substantially the same configuration as the configuration of the hydrogen generation unit F described previously. However, in this embodiment, a membrane for forming a bag body which embraces the hydrogen generating body 21 and the partitioned chamber 23 is not limited to a water-repellant hydrogen permeable membrane. The membrane is made of a predetermined resin which can endure the heat generated from the hydrogen generating body 21 and forms a hydrogen generating body accommodating bag 40a.

An aperture portion 40b for discharging hydrogen generated along with a hydrogen generation reaction to the inside of the accommodating body 41 from the inside of the hydrogen generating body accommodating bag 40a is formed on the hydrogen generating body accommodating bag 40a. Accordingly, hydrogen can be smoothly scattered through a plurality of apertures formed in the aperture portion 40b.

The accommodating body 41 is formed of an accommodating body main body 41a which is made of a resin and has a bottomed tubular shape, and an accommodating body lid body 41b which closes an upper opening of the accommodating body main body 41a.

The accommodating body main body 41 a is a portion which accommodates the hydrogen generation structural body 40 at the time of immersing the hydrogen generation unit H into a liquid.

The accommodating body lid body 41b is a member having an approximately cylindrical shape which is formed such that the accommodating body lid body 41b can be fitted in an upper opening of the accommodating body main body 41a, and the accommodating body lid body 41b has a hole portion 41c at substantially the center thereof.

A permeation membrane portion 41e is formed on an upper end portion of the hole portion 41c by expanding a water-repellant hydrogen permeable membrane so that hydrogen in the accommodating body 41 can be scattered to the outside of the accommodating body 41.

According to the hydrogen generation unit H having such a configuration, in producing a hydrogen-containing liquid, first, a partitioned chamber 23 of the hydrogen generation structural body 40 is pushed so that the reaction water 22 embraced in the partitioned chamber 23 is brought into a flowout state and is brought into contact with the hydrogen generating body 21 and hence, a hydrogen generation reaction is caused.

Next, the hydrogen generation structural body 40 where a hydrogen generation reaction is started is accommodated in the accommodating body main body 41a, and is closed by the accommodating body lid body 41b and, then, the hydrogen generation structural body 40 is immersed into a liquid.

Then, hydrogen generated in the hydrogen generation structural body 40 is discharged to the outside through the aperture portion 40b, and is stored in the accommodating body 41.

Hydrogen in the accommodating body 41 is gradually discharged through the permeation membrane portion 41e corresponding to the increase of an internal pressure of the accommodating body 41 so that hydrogen is dissolved in a liquid and hence, a hydrogen-containing liquid is produced.

As described above, also with the use of the hydrogen generation unit H according to this embodiment, it is possible to reduce time and effort for measuring a reaction water 22 or the like as much as possible and hence, a hydrogen-containing liquid can be produced more conveniently compared to a conventional hydrogen adding instrument.

### [Tenth embodiment]

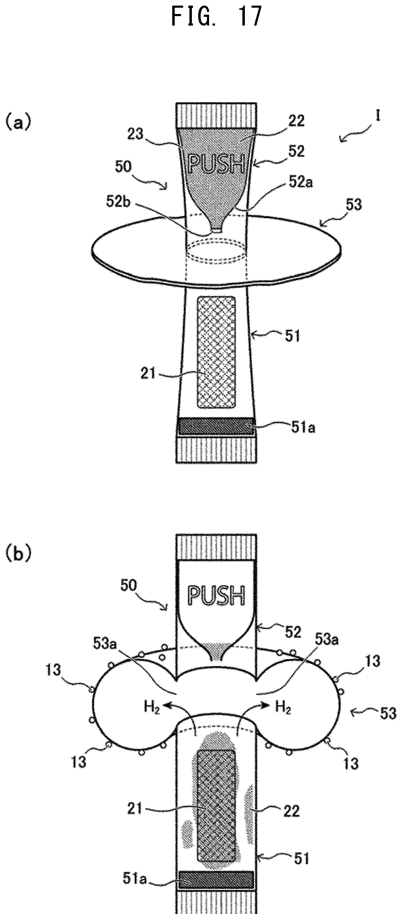

Next, a hydrogen generation unit I according to a tenth embodiment is described with reference to Fig. 17. Fig. 17 is an explanatory view which shows the constitution of hydrogen generation unit I according to this embodiment.

The hydrogen generation unit I is formed of: an accommodating body 50 which is formed in a bottomed cylindrical shape having a lid; and a hydrogen generating body 21 disposed in the inside of the accommodating body 50.

The accommodating body 50 includes: lower cylindrical portion 51 which forms a lower part of the accommodating body 50 and an upper cylindrical portion 52 which form an upper part of the accommodating body 50. A float portion 53 is disposed between the lower cylindrical portion 51 and the upper cylindrical portion 52.

The Lower cylindrical portion 51 is a bottomed cylindrical portion having an upper opening and is configured to accommodate a hydrogen generating body 21 therein.

A sinker portion 51 a which functions as a weight so as to make the accommodating body 50 sink in a liquid is disposed on an outer surface of a bottom of the lower cylindrical portion 51.

The upper cylindrical portion 52 is a cylindrical portion having a lid and a lower opening. The upper cylindrical portion 52 is made of a soft material having elasticity such as the silicon such that the upper cylindrical portion 52 is easily deformable when pressed by a force generated by a fingertip.

The inside of the upper cylindrical portion 52 is partitioned by a substantially funnel-shaped partition wall portion 52a which is disposed in the upper cylindrical portion 52. A partitioned chamber 23 is formed above the partition wall portion 52a, and the partitioned chamber 23 functions as a non-flowout state such that the partitioned chamber 23 accommodates reaction water 22 and maintains the upper part in a non-flowout state.

On a distal end of partition part 52a which is narrowed downward, an easy-to-break portion 52b is formed. The easy-to-break portion 52b maintains reaction water 22 accommodated in the partitioned chamber 23 in a non-flowout state usually, while the easy-to-break portion 52b is broken when a force is applied to the partitioned chamber 23 (upper cylindrical portion 52) by a force generated by a fingertip so that reaction water accommodated in the partitioned chamber 23 is brought into a flowout state.

A float portion 53 is a portion which expands like a floating ring by generated hydrogen. As shown in Fig. 17(b), an upper edge of a slit portion 53a which is formed circumferentially along an inner peripheral portion of float portion 53 is connected to a periphery of the lower opening of the upper cylindrical portion 52, and a lower edge of slit portion 53a is connected a periphery of the upper opening of the lower cylindrical portion 51. Fig. 17(a) shows a float portion 53 in a shrunken state before a hydrogen generation reaction is generated.

The float portion 53 is made of a water-repellant hydrogen permeable membrane and allows hydrogen stored in the float portion 53 to be discharged to the outside of the accommodating body 50.

According to the hydrogen generating unit I having the above-mentioned configuration, in generating a hydrogen-containing liquid, firstly, partitioned chamber 23 of the upper cylindrical portion 52 is pressed so that contained reaction water 22 is brought into a flow-out state where water is brought into contact with the hydrogen generating body 21 so that a hydrogen generation reaction occurs and, then, generated hydrogen is immersed into a liquid.

Then, the hydrogen generation unit I is sunk in the liquid due to the sinker portion 51a mounted on the lower cylindrical portion 51, and reaches the bottom of preparation container 10 shown in Fig. 12, for example.

Hydrogen generated in the accommodating body 50, as shown in Fig. 17(b), is stored in the float portion 53 through slit member 53a. Bubbles 13 are generated through the water-repellant hydrogen permeable membrane which forms float portion 53 and are gradually diffused in a liquid. That is, liquid hydrogen is dissolved in the liquid so that a hydrogen-containing liquid is produced.

Along with such an operation, the float portion 53 gradually expands and is formed into a floating ring shape thus generating buoyancy force which makes the hydrogen generation unit I float.

With such an operation, the hydrogen generation unit I gradually moves upward in the preparation container 10.

Accordingly, at the time of opening the preparation container 10 and taking out the hydrogen-containing liquid from preparation container 10, the hydrogen generation unit I floats up to an upper opening of preparation container 10 and hence, the hydrogen generation unit I can be easily taken out from the preparation container 10.

As has been described heretofore, according to the hydrogen generation unit of this embodiment, it is possible to provide a hydrogen generation unit for producing a hydrogen-containing liquid where the hydrogen generation unit is immersed in a liquid and hydrogen is made to be contained in the liquid, wherein the hydrogen generation unit is configured such that a hydrogen generating agent which generates hydrogen by being impregnated with water, the water, and a non-flowout state maintaining unit which maintains the water in a non-flowout state where the water does not react with the hydrogen generating agent are accommodated in an accommodating body having a discharge unit for discharging a hydrogen gas, and
the non-flowout state maintaining unit is configured to change the water in the non-flowout state into a flowout state where the water is reactable with the hydrogen generating agent by applying a predetermined amount of energy to the accommodating body from outside the accommodating body, whereby the water brought into the flowout state is made to react with the hydrogen generating agent by being triggered by application of the energy and hydrogen generated in the accommodating body is discharged through the discharge unit, and the hydrogen-containing liquid is produced without permeation of the liquid into the hydrogen generation unit.

Finally, the above-mentioned respective embodiments are provided only for an exemplifying purpose and the present invention is not limited to such embodiments. Accordingly, it is needless to say that various modifications are conceivable depending on design provided that these modifications do not depart from the technical concept of the present invention.

For example, in the above-mentioned embodiment, hydrogen generated in the accommodating body is discharged to the outside through a membrane, and hydrogen is dissolved in water outside the accommodating body thus preparing hydrogen containing water. However, the present invention is not limited to such a case, and the membrane per se may be set as a portion where hydrogen is dissolved in water. To be more specific, the membrane may be made of a material which allows the impregnation of contained water in a liquid form while preventing the permeation of water in a liquid form, and allows a hydrogen gas to permeate the membrane. By allowing a hydrogen gas to permeate the membrane into which contained water is impregnated in a liquid form in a direction toward the outside of the accommodating body, a hydrogen gas may be dissolved in impregnated water thus producing hydrogen containing water within a film thickness. Hydrogen containing water produced within the film thickness is gradually discharged to the outside of the membrane from the inside of the membrane due to a concentration gradient of hydrogen concentration between the inside of the membrane and the outside of the membrane and, eventually, the entire liquid becomes hydrogen water.

### [Reference Signs List]

- A: hydrogen generation unit
- A1: hydrogen generation unit
- A2: hydrogen generation unit
- A3: hydrogen generation unit
- A4: hydrogen generation unit
- A5: hydrogen generation unit
- A6: hydrogen generation unit
- B: hydrogen generation unit
- B7: hydrogen generation unit
- B8: hydrogen generation unit
- C: hydrogen generation unit
- D: hydrogen generation unit
- E: hydrogen generation unit
- F: hydrogen generation unit
- G: hydrogen generation unit
- H: hydrogen generation unit
- I: hydrogen generation unit
- P: user
- 1: accommodating body
- 2: hydrogen generating agent
- 3: accommodating chamber
- 3a: water accommodating chamber
- 3b: agent accommodating chamber
- 4: penetrating member
- 4a: penetrating projection
- 5: movement passage
- 6: narrowed passage
- 7: hydrogen discharge port
- 11: liquid (drinking water)
- 14: reverse flow preventing portion
- 15: trap chamber
- 20: accommodating body
- 21: hydrogen generating body
- 22: water (reaction water)
- 23: partitioned chamber
- 27: hydrogen gas
- 23b: easy-to-break portion
- 24: easy-to-break portion
- 30: reaction water (frozen water)
- 31: hydrogen generating body
- 31b: hydrogen generating agent
- 35: ice particles
- 52b: easy-to-break portion
- 61: accommodating body
- 71: accommodating body
- 81: accommodating body
- 82: easy-to-break portion

## Claims

1. A hydrogen generation unit for producing a hydrogen-containing liquid where the hydrogen generation unit is immersed in a liquid and hydrogen is made to be contained in the liquid, wherein the hydrogen generation unit is configured such that a hydrogen generating agent which generates hydrogen by being impregnated with water, the water, and a non-flowout state maintaining unit which maintains the water in a non-flowout state where the water does not react with the hydrogen generating agent are accommodated in an accommodating body having a discharge unit for discharging a hydrogen gas, and
the non-flowout state maintaining unit is configured to change the water in the non-flowout state into a flowout state where the water is reactable with the hydrogen generating agent by applying a predetermined amount of energy to the accommodating body from outside the accommodating body,
whereby the water brought into the flowout state is made to react with the hydrogen generating agent by being triggered by application of the energy and hydrogen generated in the accommodating body is discharged through the discharge unit, and the hydrogen-containing liquid is produced without permeation of the liquid into the hydrogen generation unit.

2. The hydrogen generation unit according to claim 1, wherein the discharge unit is formed of a hydrogen discharge port formed of a narrowed passage.

3. The hydrogen generation unit according to claim 2, wherein the hydrogen generating agent, the water and the non-flowout state maintaining unit are accommodated in an accommodating chamber formed in the accommodating body having the hydrogen discharge port, and a reverse flow preventing portion is formed in the narrowed passage which communicates with the accommodating chamber.

4. The hydrogen generation unit according to claim 2 or 3, wherein in a middle portion of the narrowed passage, a trap chamber which stores the water which possibly flows out from the inside of the accommodating body and the liquid which enters the trap chamber from the outside of the accommodating body is formed.

5. The hydrogen generation unit according to claim 3 or 4, wherein the reverse flow preventing portion is formed by extending an end portion of the narrowed passage into the inside of the accommodating chamber and/or to the inside of the trap chamber at least at one portion of a communication base portion between the accommodating chamber and/or the trap chamber and the narrowed passage.

6. The hydrogen generation unit according to claim 1, wherein the discharge unit is formed of a water-repellant hydrogen permeable membrane.

7. The hydrogen generation unit according to claim 6, wherein the water-repellant hydrogen permeable membrane is at least one selected from a group consisting of a waterproof moisture permeable material, a semipermeable membrane, a reverse osmosis membrane, and a stretched PTFE.

8. The hydrogen generation unit according to claim 6 or 7, wherein the water-repellant hydrogen permeable membrane is a membrane of an extremely large front surface area having a large number of minute apertures, and is configured to generate a large number of minute hydrogen bubbles from a front surface of the membrane due to permeation of hydrogen through the apertures.

9. The hydrogen generation unit according to any one of claims 1 to 8, wherein the non-flowout state maintaining unit is a flexible partitioned chamber which accommodates the water in a non-flowout state by hermetically accommodating the water, and the partitioned chamber includes an easy-to-break portion which brings the water into a flowout state by discharging water stored in the partitioned chamber by being applied with a predetermined amount of an external force as the energy.

10. The hydrogen generation unit according to claim 9, wherein
the accommodating chamber includes a water accommodating chamber and an agent accommodating chamber,
the water accommodating chamber is formed in an upper portion of the accommodating body and the partitioned chamber and a penetrating member on which a penetrating projection having a sharpened distal end are accommodated in the water accommodating chamber, the penetrating member is accommodated in the water accommodating chamber such that the penetrating projection opposedly faces the easy-to-break portion of the partitioned chamber, and the agent accommodating chamber is formed in a lower portion of the accommodating body, the hydrogen generating agent is accommodated in the agent accommodating chamber, the water accommodating chamber and the agent accommodating chamber are made to communicate with each other through a movement passage, and the narrowed passage which makes the water accommodating chamber and the outside communicate with each other is disposed above the water accommodating chamber.

11. The hydrogen generation unit according to any one of claims 1 to 10, wherein the energy is heat, the water is frozen water, and the frozen water per se is configured to function as the non-flowout state maintaining unit.

12. The hydrogen generation unit according to any one of claims 1 to 10, wherein the energy is heat, the water is gelled water, and the gelled water per se is configured to function as the non-flowout state maintaining unit.
